# EUROPEAN PATENT SPECIFICATION

(11) **EP 2 692 167 B1**
(45) Date of publication and mention of the grant of the patent: **30.11.2016**
(21) Application number: 12764753.5
(22) Date of filing: 22.03.2012
(51) Int. Cl.: G01S 5/00, H04B 17/23, H04B 17/24, H04B 17/27, H04W 24/10, H04W 64/00

(54) **RADIO TERMINAL, RADIO STATION, CONTROL APPARATUS, AND COMMUNICATION CONTROL METHOD IN RADIO COMMUNICATION SYSTEM**
FUNKENDGERÄT, FUNKSTATION, STEUERUNGSVORRICHTUNG UND KOMMUNIKATIONSSTEUERUNGSVERFAHREN IN EINEM FUNKKOMMUNIKATIONSSYSTEM
TERMINAL RADIO, STATION RADIO, APPAREIL DE COMMANDE ET PROCÉDÉ DE COMMANDE DE COMMUNICATION DANS UN SYSTÈME DE COMMUNICATION RADIO

(30) Priority: 31.03.2011 JP 2011077928
(43) Date of publication of application: 05.02.2014
(73) Proprietor: NEC Corporation, Tokyo 108-8001 (JP)
(72) Inventor: FUTAKI, Hisashi, Tokyo 108-8001 (JP)
(74) Representative: MacDougall, Alan John Shaw
(86) International application number: PCT/JP2012/001972
(87) International publication number: WO 2012/132340

(56) References cited:
- WO-A2-2009/043002
- JP-A- 2008 312 223
- "Maximizing Location Information Availability for MDT", 3GPP DRAFT; S2-105364_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jacksonville; 20101115 - 20101119, 9 November 2010 (2010-11-09), XP050631222, [retrieved on 2010-11-09]
- HUAWEI: "Addition of new test case for inter-frequency inbound handover to UMTS CSG cell with non-member UE", 3GPP DRAFT; R5-106689 INTER-F HANDOVER TO CSG CELL WITH NON-MEMBER UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Shanghai, PR China; 20101115 - 20101119, 22 November 2010 (2010-11-22), XP050617547, [retrieved on 2010-11-22]
- 3GPP TS32.422, V10.2.1 January 2011, pages 11 - 14,101-102, XP050476227

## Description

This application is based upon and claims priority from Japanese Patent Application No. 2011-077928, filed on March 31, 2011.

### Background

The present application relates to a radio communication system controlling obtainment and reporting of measurement information by a radio terminal and, more particularly, to a radio terminal having a function of reporting measurement information in accordance with a measurement instruction from a radio communication network, as well as to a radio station, a control apparatus, and a communication control method.

In 3GPP (3rd Generation Partnership Project), to reduce operation costs (OPEX) incurred in drive tests by operators, it is considered to have radio terminals measure and report information hitherto collected through drive tests, or like information (see 3GPP TS 37.320 v10.0.0 (<URL> http:www.3gpp.org/ftp/Specs/html-info/37320.htm), hereinafter referred to as "NPL 1"). The ultimate goal of this consideration is to minimize execution of drive tests, and relevant technologies are correctively called MDT (Minimization of Drive Test). MDT is intended for application to both of UMTS (Universal Mobile Telecommunication System), which is a cellular system specified by 3GPP, and LTE (Long Term Evolution). Incidentally, "measurement" referred to here includes the operation of "detecting" a certain circumstance.

In MDT, the following two modes are specified as to a mode for a radio terminal to obtain and report measurement information (see NPL 1).
1. Immediate MDT: mode in which a radio terminal obtains and reports measurement information while it is in active state.
2. Logged MDT: mode in which a radio terminal in idle state obtains measurement information and, while it is in active state, reports the obtained measurement information.

Moreover, in the consideration of MDT, the basic policy is that a radio communication network side decides which radio terminal shall obtain and report measurement information, that is, a radio communication network-led control of radio terminals' obtainment and reporting of measurement information. The following two problem with received quality. If many radio terminals selected at random are allowed to collect information, it is expected that excessive loads are imposed on the terminals.

Accordingly, an object of certain embodiments is to provide a radio terminal that can efficiently measure measurement information accompanied by detailed location information and report it to a radio communication network while suppressing a load on the terminal, as well as a radio station, a control apparatus, and a communication control method.

NTT DoCoMo, Inc., "Maximizing Location Information Availability for MDT", 3GPP TSG SA WG2 Meeting #82, 15-19 November 2010, Jacksonville, Utah, USA, discloses a high level concept of the MDT and discusses several proposals in order to maximize the availability of the location information for MDT purposes.

WO 2009/043002 discloses a method and apparatus for supporting home Node B (HNB) services. A wireless transmit/receive unit (WTRU) receives HNB access restriction information from an HNB and accesses the HNB if an access to the HNB is allowed based on the HNB access restriction information. The HNB access restriction information may be a closed subscriber group identity (CSG ID), a status bit indicating whether an HNB cell is available or not, an identity of WTRUs that are allowed to access the HNB, information indicating whether an access to a cell is barred or not. The WTRU may trigger measurements for cell reselection even though signal strength on a currently connected cell is above a threshold. The measurement may be triggered manually, periodically, under the instruction from the network, or based on a neighbor cell list including information about HNB cells located nearby.

Huawai, "Addition of new test case for inter-frequency inbound handover to UMTS CSG cell with non-member UE", 3GPP TSG-RAN WG5 Meeting #49, 15-19 November 2010, Shanghai, PR China, discloses a test case to verify that a UE can report the indication of non-member to the SRNC in a measurement report.

### Summary

According to an aspect of the present invention, there is provided a radio terminal configured to communicate with a radio station, comprising: a control unit configured to transmit, to the radio station, a signal requesting a Minimization of Drive Test, MDT, measurement instruction from the radio station; a measurement unit configured to perform MDT measurement in response to receiving the MDT measurement instruction from the radio station; and a transmission unit configured to transmit to the radio station a signal reporting a MDT measurement result and information regarding location of the radio terminal.

According to another aspect of the invention, there is provided a communication control method in a radio terminal configured to communicate with a radio station, compromising: transmitting, to the radio station, a signal requesting a Minimization of Drive Test, MDT, measurement instruction from the radio station; performing MDT measurement in response to receiving the MDT measurement instruction from the radio station; and transmitting to the radio station a signal reporting a MDT measurement result and information regarding location of the radio terminal.

According to another aspect of the invention, there is provided a radio station configured to communicate with a radio terminal, comprising: a reception unit configured to receive a signal requesting a Minimization of Drive Test, MDT, measurement instruction from the radio terminal; a transmission unit configured to transmit, to the radio terminal, a signal including the MDT measurement instruction in response to receiving the signal requesting the MDT measurement instruction; and a storage unit configured to store a MDT measurement result and information regarding location of the radio terminal received from the radio terminal.

According to another aspect of the invention, , there is provided a control apparatus configured to communicate with a radio station, comprising: a reception unit configured to receive, from the radio station, a Minimization of Drive Test, MDT measurement instruction request signal transmitted from a radio terminal; a control unit configured to determine, in response to the MDT measurement instruction request signal, whether or not a MDT measurement result by the radio terminal is necessary; and a transmission unit configured to, when it is determined that the MDT measurement result is necessary, transmit the MDT measurement instruction signal to the radio terminal.

According to another aspect of the invention, there is provided a radio communication system comprising the aforementioned radio terminal, the aforementioned radio station, and the aforementioned control apparatus.

According to an illustrative embodiment, it is possible to achieve efficient collection of measurement information accompanied by detailed location information such as GPS location information while suppressing a load on a terminal. Thus, it is possible to realize coverage mapping with taking into account received quality in a close area where only limited radio terminals are present, the realization of which has been impossible, or difficult, by means of drive tests or existing MDT.

### BRIEF DESCRIPTION OF DRAWINGS

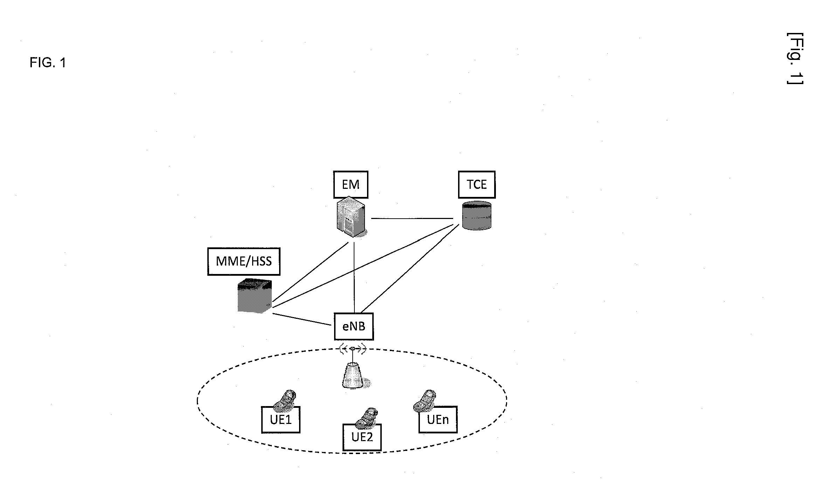

[fig. 1] FIG. 1 is a schematic diagram of a LTE radio communication system.
[fig. 2] FIG. 2 is a sequence diagram of Immediate MDT in Signaling based approach in LTE, which is being considered by 3GPP.
[fig. 3] FIG. 3 is a sequence diagram for describing basic operation in an embodiment of the present invention.
[fig. 4] FIG. 4 is a sequence diagram showing a radio communication method according to a first illustrative embodiment.
[fig. 5] FIG. 5 is a block diagram showing a functional configuration of a radio terminal according to the first illustrative embodiment.
[fig. 6] FIG. 6 is a flowchart showing communication control operation of the radio terminal shown in FIG. 4.
[fig. 7] FIG. 7 is a block diagram of a functional configuration of a radio station in a radio communication system according to the first illustrative embodiment.
[fig. 8A] FIG. 8A is a block diagram showing a functional configuration of MME/HSS in the radio communication system according to the first illustrative embodiment.
[fig. 8B] FIG. 8B is a block diagram showing a functional configuration of a radio communication network operation management apparatus EM.
[fig. 9] FIG. 9 is a block diagram showing a functional configuration of TCE in the radio communication system according to the first illustrative embodiment.
[fig. 10] FIG. 10 is a sequence diagram of a radio communication method according to a first example of the present invention.
[fig. 11] FIG. 11 is a sequence diagram showing a first example of a trigger for a MDT measurement request in the radio communication method according to the first example.
[fig. 12] FIG. 12 is a sequence diagram showing a second example of the trigger for the MDT measurement request in the radio communication method according to the first example.
[fig.13]FIG. 13 is a sequence diagram showing a third example of the trigger for the MDT measurement request in the radio communication method according to the first example.
[fig.14]FIG. 14 is a sequence diagram showing a fourth example of the trigger for the MDT measurement request in the radio communication method according to the first example.
[fig.15]FIG. 15 is a sequence diagram showing a fifth example of the trigger for the MDT measurement request in the radio communication method according to the first example.
[fig.16]FIG. 16 is a sequence diagram showing a sixth example of the trigger for the MDT measurement request in the radio communication method according to the first example.
[fig.17]FIG. 17 is a sequence diagram showing a seventh example of the trigger for the MDT measurement request in the radio communication method according to the first example.
[fig.18]FIG. 18 is a sequence diagram of a radio communication method according to a second example of the present invention.
[fig.19]FIG. 19 is a sequence diagram of a radio communication method according to a third example of the present invention.
[fig.20]FIG. 20 is a sequence diagram of a radio communication method according to a fourth example of the present invention.
[fig.21]FIG. 21 is a sequence diagram of a radio communication method according to a second illustrative embodiment of the present invention.
[fig.22]FIG. 22 is a sequence diagram of a radio communication method according to a fifth example of the present invention.

### Detailed Description

### 1. Brief description

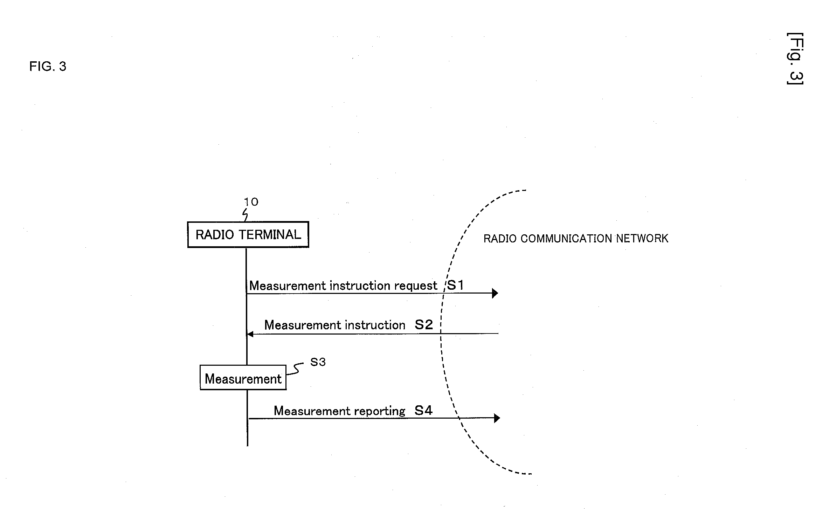

Referring to FIG. 3, a radio terminal 10 has a function of performing measurement in response to receipt of a measurement instruction from a radio communication network side and reporting a result of the measurement along with terminal location information to the radio communication network side. The radio terminal can request to start this series of measurement operation by sending a request. When the radio terminal 10 sends a measurement instruction request to the radio communication network side (Operation S1), the radio communication network side, in response to receipt of the measurement instruction request, determines the effectiveness or necessity of the measurement and, if the measurement is effective or necessary, responds by sending an instruction to perform this measurement (Operation S2). In response to receipt of the measurement instruction from the radio communication network side, the radio terminal 10 performs the measurement instructed to perform (Operation S3) and reports the measured information to the radio communication network side (Operation S4).

Since collection of required measurement information can be activated by request from the radio terminal side as described above, it is possible to collect required measurement information along with detailed location information from a radio terminal without imposing an excessive load on the radio terminal. For example, it is possible to collect measurement information accompanied by GPS location information from an area (or its neighbor area) where there is a problem with received quality, without imposing excessive loads on terminals.

Note that the term "measurement instruction" can mean not only an instruction to perform measurement itself but also an instruction to perform measurement including a series of subsequent operations or related operations. Specifically, a "measurement instruction" can mean an "instruction to perform measurement" and can also mean an "instruction" including the meanings of an "instruction to perform measurement and report a measurement result," "instruction to perform measurement, record a measurement result, and report a log of the measurement result," "instruction to obtain and report measurement information," "instruction to report measurement information," "instruction to record a measurement result and report a log of the measurement result," and the like. A description will be given below on this assumption.

A more detailed example of the configuration is as follows. The radio terminal 10 has a function of obtaining measurement information designated from the radio communication network side and reporting it to the radio communication network side, a function of obtaining information regarding location of itself and reporting it to the radio communication network side, and a function of, in response to occurrence of a predefined trigger, making a request to the radio communication network side for execution of a series of operations required to obtain and report measurement information. Here, for the "series of operations required to obtain and report measurement information," "UE measurement collection and measurement reporting in Minimization of Drive Test (MDT)" can be cited as an example. However, this is merely illustrative. Obtainment of measurement information by a radio terminal in MDT will be referred to as "MDT measurement." MDT measurement and reporting of the measurement information obtained in the MDT measurement will be referred to as "MDT measurement reporting." MDT measurement and recording (storing) of the measurement information obtained in the MDT measurement will be referred to as "MDT measurement logging."

In MDT, the following two modes are considered as modes for a radio terminal to obtain and report measurement information.
1. Immediate MDT: mode in which a radio terminal obtains and reports measurement information while it is in active state.
2. Logged MDT: mode in which a radio terminal in idle state obtains measurement information and, while it is in active state, reports the obtained measurement information.

Moreover, the following two approaches are considered as approaches for a radio communication network side to determine which radio terminal shall obtain and report measurement information, that is, as a radio communication network-led control of radio terminals' obtainment and reporting of measurement information.
A. Management based approach: approach in which a target area where MDT measurement information is collected is first designated, and an arbitrary selection is made from among those radio terminals staying in the area.
B. Signaling based approach: approach in which a specific radio terminal is selected based on the unique ID (Identity) of this radio terminal.

Here, the conceivable radio communication network is, for example, 3GPP UTRAN (Universal Terrestrial Radio Access Network) or E-UTRAN (Evolved UTRAN). Moreover, UTRAN or E-UTRAN and their respective uppler-level radio communication network, CN (Core Network) or EPC (Evolved Packet Core), collectively can be thought of as a radio communication network.

The "information regarding location" may include:
* detailed location information obtained by GNSS (Global Navigation Satellite System) as typified by GPS (Global Positioning Service);
* detailed location information obtained by a location information service LCS (Location Service);
* the IDs of an area (e.g., a cell) where the radio terminal is staying and its neighbor areas (cells) and the received quality of downlink signals therefrom; and the like.

Note that the conceivable detailed location information obtained by LCS is, for example, OTDOA (Observed Time Difference Of Arrival) or the like.

Predefined conditions for occurrence of the trigger may include:
* an instruction given by a user of the ratio terminal to the ratio terminal to make a request;
* an instruction from a higher-level layer (Application Layer) to a lower-level layer (Radio Resource Control (RRC) Layer) within the radio terminal to make a request;
* when a first condition related to the received quality of a downlink signal, which will be described below, is met;
* when a second condition related to obtainment of the information regarding location, which will be described below, is met;
* when a third condition related to neighbor cell, which will be described below, is met;
* when a fourth condition related to cell (re-)selection, which will be described below, is met;
* when a fifth condition related to communication state is met; and the like. Occurrence of any one of the foregoing can serve as the condition. Here, a radio station to which a measurement instruction request is made based on occurrence of the trigger may broadcast or individually notify to covered radio terminals in advance that it supports MDT or supports the functions provided in an embodiment. Moreover, for a method for a user to give an instruction to a radio terminal, the broadcast or individually notified information may be shown on a display of the user's radio terminal.

The "first conditions" may include:
* when it is detected that the received quality is lower than a predetermined quality;
* when a predetermined period of time has passed with the received quality remaining lower than a predetermined quality;
* when the radio terminal keeps staying in a predetermined area for a predetermined period of time with the received quality remaining lower than a predetermined quality;
* when the received quality has increased from a level lower than a predetermined quality to a level equal to or higher than the predetermined quality; and the like. Occurrence of any one of the foregoing can serve as the condition.

The "second conditions" may include:
* when the radio terminal can normally obtain detailed location information;
* when the accuracy of detailed location information obtained by the radio terminal is a predetermined value or more; and the like.
Occurrence of any one of the foregoing can serve as the condition.

Here, a conceivable method for determining whether or not detailed location information can be normally obtained is determining whether or not the detailed location information has been successfully obtained actually, determining whether or not the detailed location information obtained by a user of the radio terminal can be determined as appropriate, or the like. On the other hand, the accuracy of detailed location information may be a value calculated based on a value (error information or uncertainty) indicated by an application, the received strength of radio waves (e.g., the received strength of a GPS signal) used to obtain the detailed location information, or the like. Moreover, the conceivable error information or uncertainty is error information relative to a result of GPS calculation of the latitude, longitude, altitude, etc., or the like. In addition, in the case of using the second condition, the obtained detailed location information, or the detailed location information and its accuracy, may be notified to a radio station when the request is made.

The "third conditions" may include:
* when a neighbor cell of a radio base station to which connection (belonging) cannot be made is the best cell;
* when a predetermined period of time has passed with a neighbor cell of a radio base station to which connection (belonging) cannot be made remaining the best cell;
* when received quality of a neighbor cell of a radio base station to which connection (belonging) cannot be made is better than received quality of the serving cell by a predetermined quality difference;
* when a predetermined period of time has passed with received quality of a neighbor cell of a radio base station to which connection (belonging) cannot be made remaining better than received quality of the serving cell by a predetermined quality difference; and the like.

Occurrence of any one of the foregoing can serve as the condition. Note that the conceivable cell to which connection (belonging) cannot be made is a cell (CSG cell) of a radio base station (Closed Subscriber Group (CSG) base station) to which only limited radio terminals are allowed to connect (belong), or the like. Since the assumed case here is that a terminal is not allowed to connect (belong) to the cell, the condition corresponds to a case where the radio terminal is a non member of the CSG cell. A typical CSG radio base station is a Femto base station (referred to as Femto BTS or Femto NB/eNB) or a Home base station (referred to as Home NB/eNB or HNB/HeNB). Moreover, determination of the best cell can be performed by determining whether or not the cell is a highest-level (highest-priority) candidate in measurement reporting for ordinary cell (re-) selection or handover (HO). However, the present invention is not limited to this.

The "fourth conditions" may include:
* when a cell to which connection (belonging) can be made is detected, getting out of a situation in which a cell of a radio base station to which connection (belonging) can be made cannot be detected;
* when connection (belonging) is made to a cell to which connection (belonging) can be made, after access to a radio base station to which connection (belonging) cannot be made was attempted but failed (was rejected);
* when cell reselection between different types of radio access technologies (RAT) (Inter-RAT cell reselection) is performed (has been performed);
* when handover between different types of radio access technologies (RAT) (Inter-RAT handover) is performed (has been performed);
* when cell reselection between different areas (Inter Area cell reselection) is performed (has been performed);
* when handover between different areas (Inter Area handover) is performed (has been performed);
* when sell reselection between cells of different attributes is performed (has been performed);
* when handover between cells of different attributes is performed (has been performed); and the like.
Occurrence of any one of the foregoing can serve as the condition.

Note that the conceivable cell to which connection (belonging) cannot be made is a CSG cell as described above. Moreover, the conceivable situation in which a cell of a radio base station to which connection (belonging) can be made cannot be detected is a situation in which a radio terminal is in "Camped Normally" state, "Any Cell Selection" state, "Camped on any cell" state, or the like as defined by 3GPP. Incidentally, a cell of a radio base station to which connection (belonging) can be made is also referred to as suitable cell or acceptable cell.

The conceivable access to a radio base station to be used is Random Access. Failing in access is also referred to as Random Access Failure.

The radio access technology (RAT) refers to UMTS (WCDMA), CEMA 2000 (system), LTE, or the like. The conceivable area is Tracking Area (TA), Location Area (LA), Routing Area (RA), Public Land Mobile Network (PLMN), or the like.

Moreover, the conceivable cell attribute is a normal cell in general, CSG cell, hybrid cell between a normal cell and a CGS cell, or the like. As to the CSG cell, whether it is a member CSG cell or a non member CSG cell to a radio terminal in question further can be thought of as an attribute.

Further, more specifically, a conceivable case of the condition of Inter-RAT cell reselection or Inter-RAT handover is: for example, i) when the radio terminal performs (has performed) cell reselection or handover from a cell of a RAT (RAT-A) to a cell of another RAT (RAT-B); ii) when the radio terminal once has performed cell reselection or handover from a cell of a RAT (RAT-A) to a cell of another RAT (RAT-B) and then performs (has performed) cell reselection or handover again back to the cell of the former RAT (RAT-A); or the like. Thereby, it is possible for the radio communication network side to efficiently collect a place where Inter-RAT cell reselection or Inter-RAT handover occurs, received quality of the place (and its neighbors), and the like. Note that the former i) case and the latter ii) case premise that at least the radio base station of the cell of RAT-B and at least the radio base station of the cell of RAT-A, respectively, support reception of a MDT measurement instruction request made by the radio terminal and control according to the request.

Similarly, a conceivable case of the condition of Inter Area cell reselection or Inter Area handover is: for example, iii) when the radio terminal performs (has performed) cell reselection or handover from a cell in an area (e.g., PLMN-A) to a cell in another area (PLMN-B); iv) when the radio terminal once has performed cell reselection or handover from a cell in an area (e.g., PLMN-A) to a cell in another area (PLMN-B) and then performs (has performed) cell reselection or handover again back to the cell in the former area (PLMN-A); or the like. Thereby, it is possible for the radio communication network side to efficiently collect a place where Inter Area cell reselection or Inter Area handover occurs, received quality of the place (and its neighbors), and the like. Note that the former iii) case and the latter iv) case premise that at least the radio base station of the cell in PLMN-B and at least the radio base station of the cell in PLMN-A, respectively, support reception of a MDT measurement instruction request made by the radio terminal and control according to the request.

On the other hand, a conceivable case of the condition of cell reselection or handover between cells of different attributes is: for example, when the radio terminal performs (has performed) cell reselection or handover from a cell of a certain attribute (e.g., a normal cell) to a cell of another attribute (a CSG cell where this radio terminal is a member); when the radio terminal once has performed cell reselection or handover from a cell of a certain attribute (e.g., a normal cell) to a cell of another attribute (a CSG cell where this radio terminal is a member) and then performs (has performed) cell reselection or handover again back to the cell of the former attribute (normal cell); or the like. Thereby, it is possible for the radio communication network side to efficiently collect a place where cell reselection or handover between cells of different attributes occurs, received quality of the place (and its neighbors), and the like. Note that the case premises that at least the radio base station of the normal cell supports reception of a MDT measurement instruction request made by the radio terminal and control according to the request.

The "fifth conditions" may include:
* when reconnection to a radio base station is made (has been made) after a radio link failure (RLF) occurred;
* when reconnection to a radio base station is made (has been made) after a handover failure (HOF) occurred;
* when reception of common control information has consecutively failed a predetermined number of times;
* when reconnection to a radio base station is made (has been made) after reception of common control information consecutively failed a predetermined number of times;
* when reception of control information for receiving paging information has consecutively failed a predetermined number of times;
* when reconnection to a radio base station is made (has been made) after reception of control information for receiving paging information consecutively failed a predetermined number of times;
* when a retry of access procedure has succeeded after access procedure to a radio base station failed;
* when predetermined quality of service (QoS) is not met; and the like.

Occurrence of any one of the foregoing can serve as the condition. Note that the conceivable handover failures include not only a handover failure between identical radio access technologies (RAT) but also a handover failure between different radio access technologies. Moreover, the conceivable common control information is system information broadcast to all terminals within a cell through Broadcast Control Channel (BCCH), or the like. On the other hand, the conceivable QoS is the error rate in data transmission/reception, throughput, transmission delay, or the like.

Further, more specifically, a conceivable case of the condition of reconnection to a radio base station after a radio link failure (RLF) occurred is: for example, when, after a radio link failure (RLF) was detected while a radio terminal is staying in a cell (cell A), reconnection to a radio base station 1 of the cell A is made (has been made); when reconnection to the radio base station 1 is made (has been mad) from another cell B that is different from the cell A; when reconnection to a radio base station 2 is made from still another cell C that is different from the cell A; or the like. Thereby, it is possible for the radio communication network side to efficiently collect a place where a radio link failure (RLF) has occurred (easily occurs), received quality of the place (and its neighbors), and the like. Note that the case premises that at least the radio base station to which reconnection is made (has been made) supports reception of a MDT measurement instruction request made by the radio terminal according to an embodiment and control according to the request. In addition, the cells A, B, and C may support identical radio access technologies (RAT) or may support different RATs.

Similarly, a conceivable case of the condition of reconnection to a radio base station after a handover failure (HOF) occurred is: for example, when the radio terminal cannot detect a cell (the radio terminal goes out of synchronization with a cell/radio base station) while handover of the radio terminal from a certain cell (cell A) to another cell (cell B) is being performed (during handover procedure); when reconnection to a radio base station of a cell A or B, or any other cell, is made after handover failed due to a random access failure or any other reason; or the like. Thereby, it is possible for the radio communication network side to efficiently collect a place where a handover failure (HOF) has occurred (easily occurs), received quality of the place (and its neighbors), and the like. Note that the case premises that at least the radio base station to which reconnection is made (has been made) supports reception of a MDT measurement instruction request made by the radio terminal according to an embodiment and control according to the request.

Moreover, assumed examples of the handover failure include "Too Late Handover," "Too Early Handover," "Handover to Wrong Cell," and the like such as those specified in 3GPP LTE. Furthermore, the present invention can also be applied in the case of "Ping-Pong Handover," in which handover between specific cells is performed more frequently than needed, regarding it as a handover failure in a broad sense. For example, the conceivable condition is a case where handover between specific cells is repeated a predetermined number of times for a predetermined period of time.

Further, in the present invention, it is also possible to use some of these predefined triggers in combination.

Information regarding the above-described first to fifth conditions maybe set on (stored in) radio terminals beforehand, or may be broadcast or individually notified by a radio station to radio terminals connecting to the radio station. Here, the conceivable information regarding the first condition is an index or a value of the "predetermined quality" to be a criterion (or criteria) for determination, a value of the "predetermined period of time," all of the details of the first condition, or the like. The conceivable information regarding the second condition is a criterion to determine whether or not the detailed location information can be normally obtained, an index or a value of the "predetermined value" to be a criterion for determination for the accuracy of the detailed location information, all of the details of the second condition, or the like. The conceivable information regarding the third condition is an index or a value of the "predetermined quality" to be a criterion for determination, a value of the "predetermined period of time," all of the details of the third condition, or the like. The conceivable information regarding the fourth condition is target radio access technologies (RAT), target areas, target attributes, all of the details of the fourth condition, or the like. The conceivable information regarding the fifth condition is a value of the "predetermined number of times" to be a criterion for determination, an index or a value of the "QoS," all of the details of the fifth condition, or the like.

Moreover, a radio station may broadcast or individually notify radio terminals, which are connecting to the radio station, of an instruction to enable a function of making a request for execution of a series of operations (e.g., MDT measurement) required to obtain measurement information, which is caused by a predefined trigger (triggered off).

Another illustrative aspect is as follows. A radio terminal 10 has a function of obtaining measurement information designated by a radio station 20 and reporting it to the radio station 20, a function of obtaining information regarding its own location and reporting it to the radio station 20, and a function of, in response to occurrence of a predefined trigger, making a request to the radio station 20 for execution of a series of operations required to obtain measurement information. The radio station 20 has a function of, in response to receipt of the request, making an indication of the receipt of the request to a radio communication network operation management apparatus, which is a control apparatus managing the entire network by performing operations such as monitoring of communication status and the like and configuration of parameters. The radio communication network operation management apparatus has a function of, in response to receipt of this indication, starting control to cause the radio terminal 10 to execute the series of operations. Note that it is also conceivable that the architecture includes another higher-level station existing between the radio station 20 and the radio communication network operation management apparatus. In this case, the higher-level station receives the indication from the radio station 20 and transfers the indication itself or control information based on this indication to the radio communication network operation management apparatus.

Next, illustrative embodiments of the present invention will be described in detail by illustrating a 3GPP (3rd Generation Partnership Project) radio communication system as an example. In the description, since 3GPP LTE or 3GPP UMTS is assumed as a radio communication system (cellular system), correspondences between terms will be described below. However, these concrete device configurations are examples, and are not intended to be limiting.

* "Radio station": "radio base station eNB" in LTE; "base station controller RNC (Radio Network Controller)" in UMTS
* "Higher-level station": "(radio terminal) mobility management entity MME" or "home subscriber management server HSS" in LTE; "serving GPRS (General Packet Radio Service) support node SGSN," "mobile (communication) switching center MSC (Mobile Switching Center)," or "HSS" in UMTS
* "Radio communication network operation management apparatus": "EM (Element Manager)" or "EMS (Element Management System)" in both of LTE and UMTS
* "Information collection apparatus": "TCE (Trace Collection Entity)" in both of LTE and UMTS

### 2. First illustrative embodiment

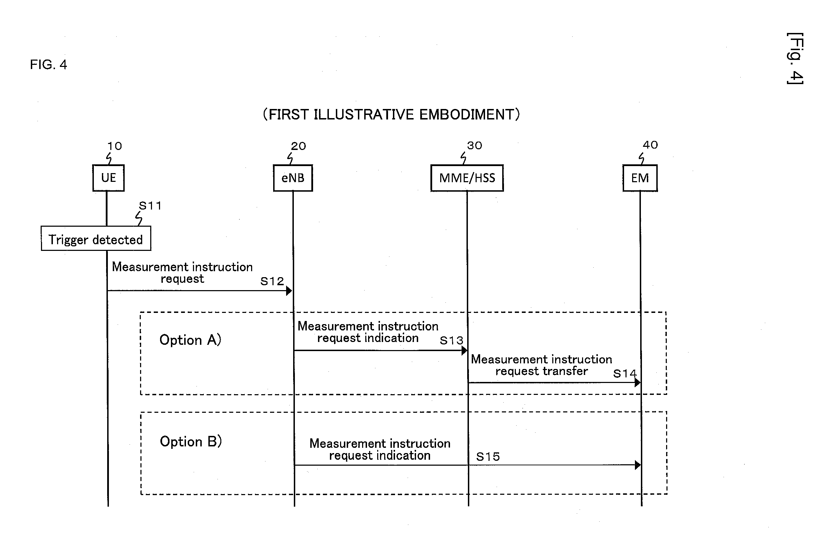

Referring to FIG. 4, assumed here is a 3GPP LTE radio communication system, which includes a radio terminal (UE) 10, a radio base station (eNB) 20, a radio terminal mobility management entity/home subscriber management server (MME/HSS) 30, a radio communication network operation management apparatus (EM) 40, and a trace information collection apparatus (TCE: Trace Collection Entity) (not shown).

In response to occurrence of a predefined trigger at the radio terminal 10 (Operation S11: "Trigger detected"), the radio terminal 10 sends the radio base station 20 a request (measurement instruction request) for an instruction to execute MDT measurement reporting (Operation S12: "UE-initiated MDT request").

Further, in an embodiment, as shown in FIG. 4 at Option A), the radio base station 20 that has received the MDT measurement instruction request indicates the request to MME/HSS 30 (Operation S13: MDT request indication), and MME/HSS 30 further transfers it to the radio communication network operation management apparatus 40 (Operation S14: MDT request transfer). Moreover, as shown in FIG. 4 at Option B), it is also possible that the radio base station 20 that has received the MDT measurement execution request indicates the request directly to the radio communication network operation management apparatus 40 (Operation S15). Thereby, the higher-level radio communication network node (MME/HSS or EM) controlling MDT measurement can recognize the MDT measurement execution request made by the radio terminal 10. The higher-level radio communication network node (MME/HSS or EM) that has recognized the request instructs the radio terminal 10 to execute MDT measurement as needed. Thereby, in a situation where it is determined that execution of MDT measurement on the radio terminal side is necessary, or in a situation where it is desired to execute MDT measurement, it is possible for the radio communication network side to recognize such a situation and appropriately handle the situation. As described above, according to Options A and B in FIG. 4, a measurement instruction request sent from the terminal is indicated to MME/HSS and/or EM by the radio base station using another message. The present invention is not limited to this mode. For example, it is also possible that the radio terminal is configured to directly send a transmission activation request to MME/HSS or EM, as in UMTS where a radio terminal sends a notification to a base station controller (RNC).

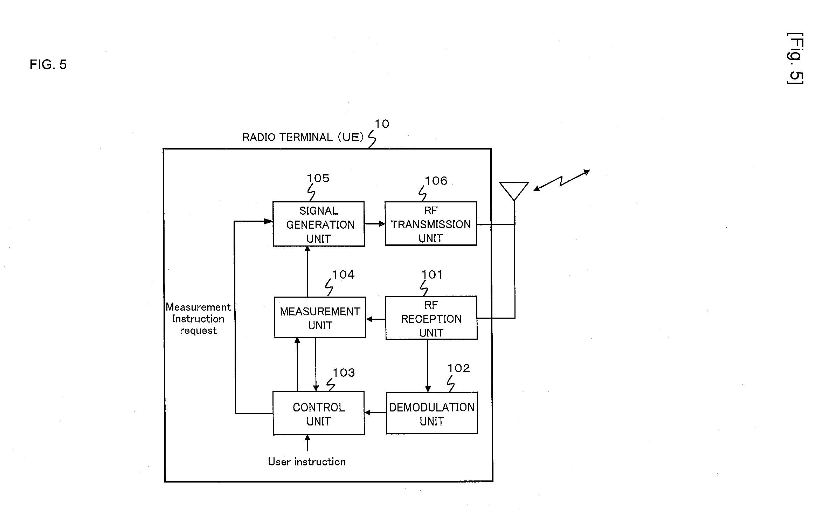

Hereinafter, a description will be given of the configurations and functionality of the radio terminal 10 and other radio communication network nodes in the radio communication system according to the present illustrative embodiment, with reference to FIGS. 5 to 9.

### 2.1) Radio terminal (UE)

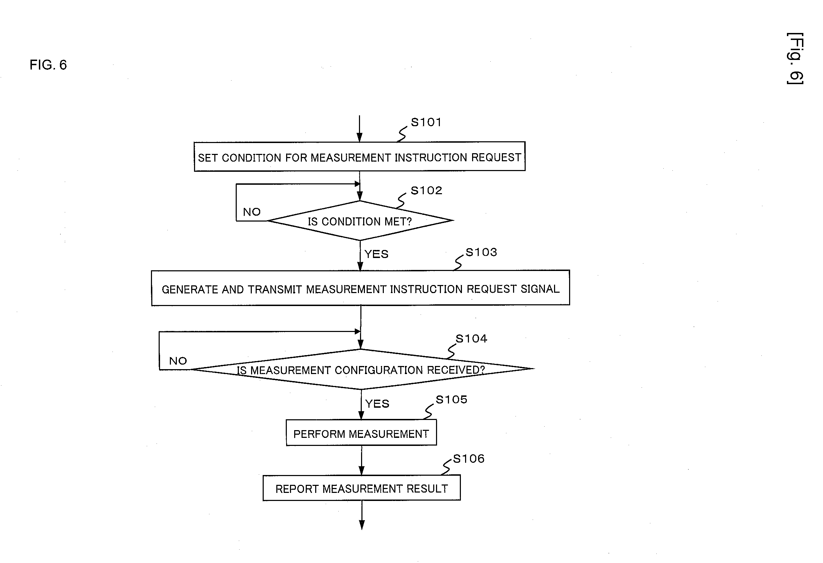

Referring to FIG. 5, the radio terminal 10 includes, in addition to a radio signal reception unit 101 and a demodulation unit 102, a control unit 103 that controls the entire operation of the radio terminal 10, a measurement unit 104 that performs measurement according to measurement configuration information from the radio communication network side and terminal location measurement, a signal generation unit 105 that generates various transmission signals, and a radio signal transmission unit 106. The radio signal reception unit 101 receives a radio signal from the radio base station, and the demodulation unit 102 demodulates the received radio signal and outputs received information to the control unit 103. The measurement unit 104 measures received quality based on the received signal received by the radio signal reception unit 101, measures detailed location by using GPS or the like, and outputs these pieces of measurement information to the control unit 103 and signal generation unit 105. The control unit 103 determines, based on the measurement information from the measurement unit 104 or a user instruction, whether a predefined trigger condition as described above is met and then instructs the signal generation unit 105 to send a measurement instruction request. A measurement instruction request signal generated by the signal generation unit 105 is sent to the radio base station via the radio signal transmission unit 106. Hereinafter, the operation of the control unit 103 for controlling the measurement instruction request will be described with reference to FIG. 6.

Referring to FIG. 6, in the control unit 103, a trigger condition for a measurement instruction request is set to a memory unit (not shown) (Operation S101). This trigger condition may be originally stored in the memory unit of the radio terminal 10 or may be stored in the memory unit by the radio base station 20 broadcasting or individually notifying to radio terminals connecting to the radio base station. Examples of the trigger condition include, as described already, an instruction from a user, degradation in received quality, and the like. More specific examples will be described later.

Subsequently, the control unit 103 determines whether or not the trigger condition is met (Operation S102). When the trigger condition is met, the control unit 103 instructs the signal generation unit 105 to generate a measurement instruction request signal, and the measurement instruction request signal is sent from the signal generation unit 105 to the radio base station 20 via the radio signal transmission unit 106 (Operation S103).

After the measurement instruction request signal is transmitted, the control unit 103 determines whether or not measurement configuration information is received from the radio base station 20 (Operation S104). In response to receipt of the measurement configuration information, the control unit 103 instructs the measurement unit 104 to perform measurement in accordance with the measurement configuration information, and the measurement unit 104 performs measurement as designated (Operation S105). The measurement unit 104 outputs a result of the measurement to the signal generation unit 105, and measurement information is sent from the signal generation unit 105 to the radio base station 20 via the radio signal transmission unit 106 (Operation S106).

### 2.2) Radio base station (eNB)

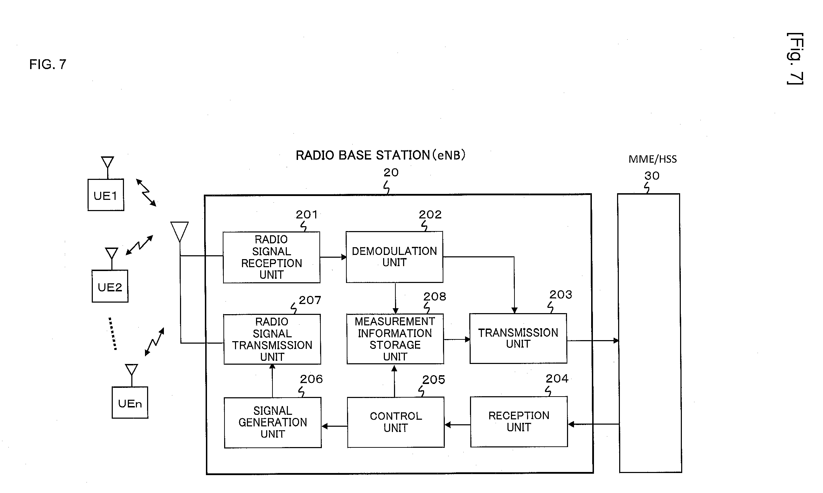

Referring to FIG. 7, the radio base station 20 includes a radio signal reception unit 201 that receives a radio signal from the radio terminal 10 and a demodulation unit 202 that demodulates the received radio signal, and further includes a transmission unit 203 and a reception unit 204 that perform transmission to and reception from higher-level stations (e.g., MME, EM, and TCE). As described above, in response to receipt of a measurement instruction request from the radio terminal 10, the transmission unit 203 transfers the measurement instruction request associated with the source radio terminal 10 to a higher-level station. Moreover, when the reception unit 204 receives measurement configuration information responding to the measurement instruction request from the higher-level station, a control unit 205 sends the measurement configuration information to the radio terminal 10 via a signal generation unit 206 and a radio signal transmission unit 207. When measurement information obtained through measurement according to this measurement configuration information by the radio terminal 10 is received via the radio signal reception unit 201 and demodulation unit 202, the received measurement information is stored in a measurement information storage unit 208 and is also transferred to the higher-level station via the transmission unit203. Note that the control unit 205 performs MDT measurement-related operation control as a radio base station, which will be described later.

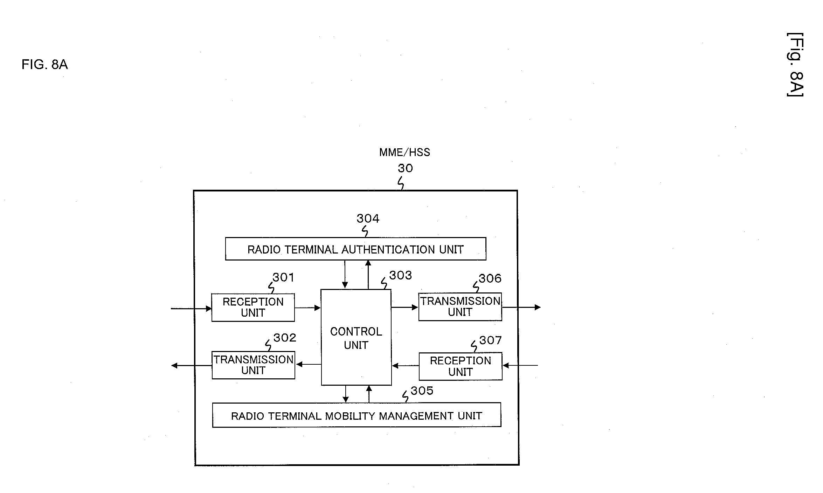

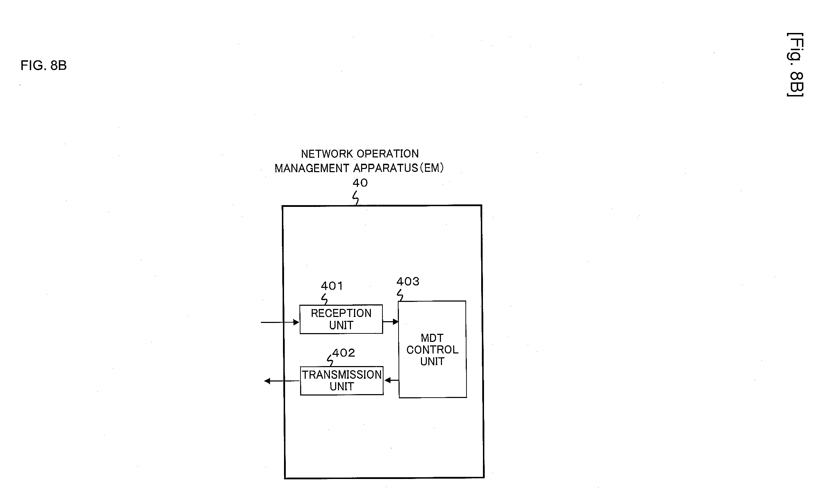

2.3) Mobility management entity/home subscriber management server (MME/HSS) Referring to FIG. 8A, MME/HSS 30 includes a reception unit 301 and a transmission unit 302 for performing transmission to and reception from the radio base station 20, a control section 303 that controls various functions, a radio terminal authentication unit 304 that performs authentication of the radio terminal 10, a radio terminal mobility management unit 305 that manages the mobility of the radio terminal 10, and a transmission unit 306 and a reception unit 307 for transmitting and receiving signals to/from the radio communication network operation management apparatus 40 and radio communication networks (an operator radio communication network and the Internet). When the reception unit 301 receives a measurement instruction request from the radio base station 20, the control unit 303 transfers the measurement instruction request to the radio communication network operation management apparatus 40 via the transmission unit 306 in accordance with authentication and mobility management performed by the radio terminal authentication unit304 and radio terminal mobility management unit 305, respectively. Moreover, when the reception unit 307 receives measurement configuration information from the radio communication network operation management apparatus 40, the control unit 303 transfers the measurement configuration information to the radio base station 20 to which the radio terminal 10 is connecting, via the transmission unit 302 in accordance with authentication and mobility management performed by the radio terminal authentication unit 304 and radio terminal mobility management section 305, respectively. Note that although MME and HSS are shown in a single block in FIG. 8 for convenience, MME and HSS can also be configured as independent nodes. The present invention can be implemented in both cases.

2.4) Radio communication network operation management apparatus (EM) Referring to FIG. 8B, the radio communication network operation management apparatus 40 includes a reception unit 401 that receives signals from the radio base station 20 and MME/HSS 30, a transmission unit 402 that transmits signals to the radio base station 20 and MME/HSS 30, a MDT control unit 403 that performs MDT-related control, and others. The MDT control unit 403, as will be described later, in response to receipt of a measurement instruction request from the radio terminal 10, sends back to this radio terminal 10 information required to start measurement if it is determined that measurement by this radio terminal 10 is effective or necessary for coverage mapping.

### 2.5) Trace information collection apparatus (TCE)

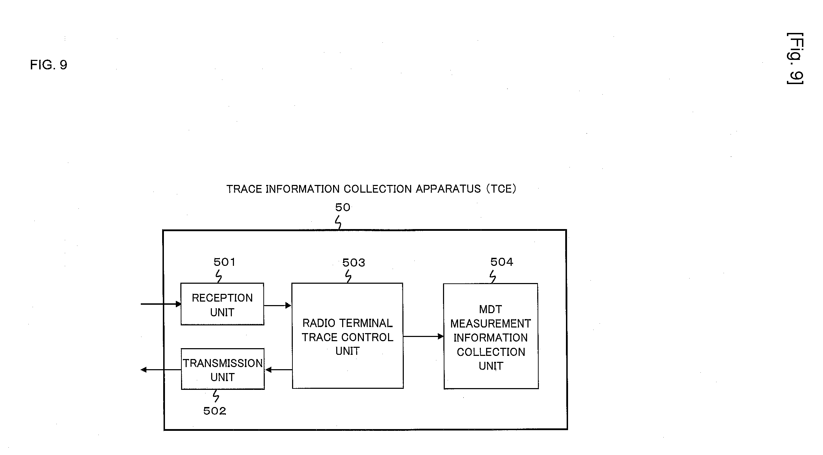

Referring to FIG. 9, the trace information collection apparatus 50 includes a reception unit 501 that receives signals from the radio base station 20 and higher-level radio communication network nodes (MME/HSS 30 and EM 40), a transmission unit 502 that transmits signals to the radio base station 20 and higher-level radio communication network nodes, a radio terminal trace control unit 503 that performs trace (trace management) of the radio terminal 10, a MDT measurement information collection unit 504 that collects MDT measurement results obtained through measurement by the radio terminal 10, and others.

### 3. First example

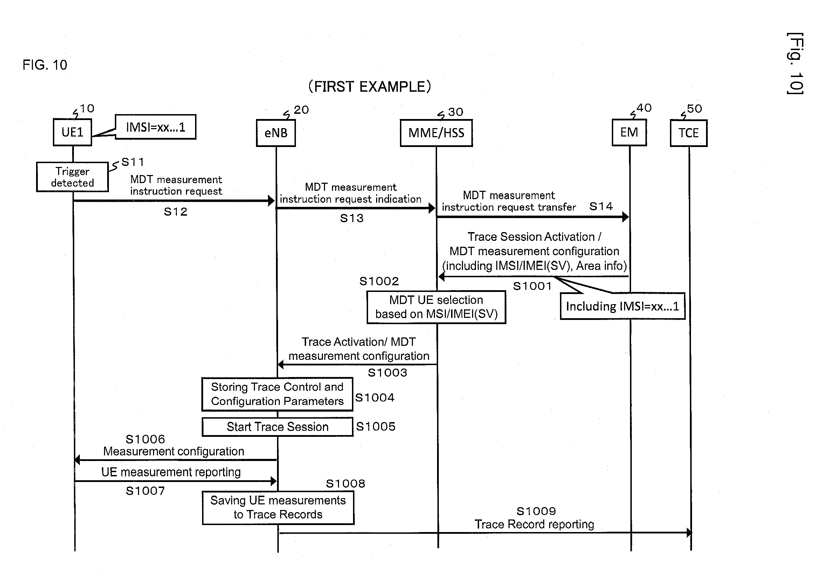

FIG. 10 is a sequence diagram of MDT when a radio terminal (UE) makes a MDT measurement execution instruction request in a first example of the present invention. Here, assumed is a case in which the radio terminal UE1 having IMSI (International Mobile Subscriber Identity) = {xx...1} as a terminal ID (Identity) makes a MDT measurement execution request. Note that another terminal ID can also be used instead of IMSI, such as IMEI (SV) (International Mobile station Equipment Identity (Software Version)). A MDT measurement activation procedure according to the present example is as follows.
Operation S11: The radio terminal UE1 detects that a predefined trigger condition is met (Trigger detected).
Operation S12: The radio terminal UE1 sends the radio base station 20 a MDT measurement execution instruction request (UE-initiated MDT request).
Operation S 13: The radio base station 20, in response to receipt of the MDT measurement instruction request, indicates to MME/HSS 30 that the MDT measurement execution request has been received (MDT request indication).
Operation S 14: MME/HSS 30 transfers the indication of the MDT measurement instruction request to EM 40 (MDT request transfer). In this event, MME/HSS 30 also indicates to EM 40 the ID (IMSI = {xx...1}) of the radio terminal UE1.

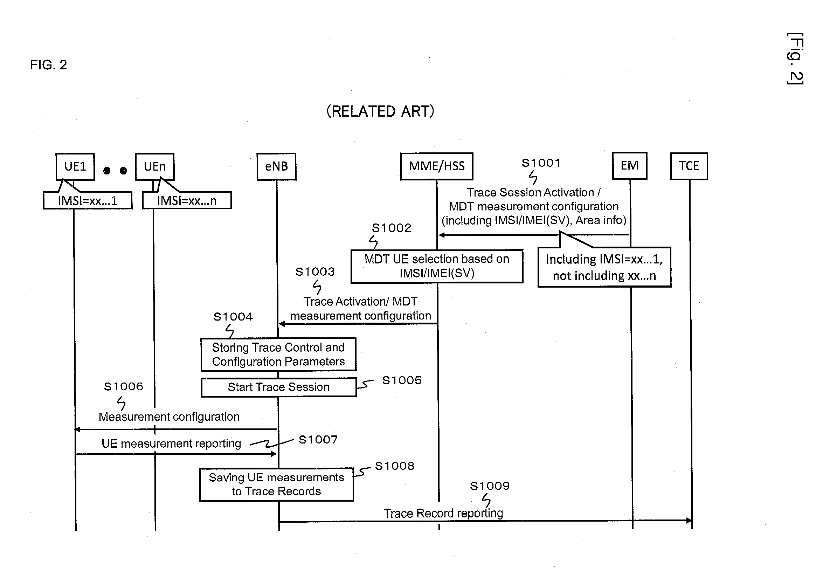

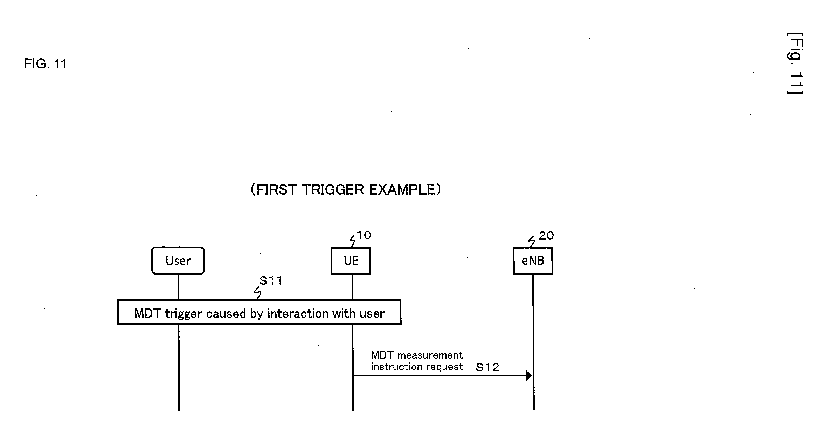

The subsequent Operations S1001 to S1009 are as described with reference to FIG. 2, and therefore a description thereof will be omitted here. Hereinafter, a description will be given of trigger examples (the sequence up to the MDT measurement instruction request made by the radio terminal) in the first example of the present invention, with reference to FIGS. 11 to 14. Incidentally, it has been described with reference to FIG. 2 that UE 1 executes measurement in accordance with the instruction to obtain measurement information and reports the obtained measurement information at a predetermined timing to eNB that is the source of the message sent in Operation S1006. However, the present invention is not limited to this mode. It is also possible that the measurement information is configured to be included in another message and thereby reported. Further, it is also possible that the measurement information is configured to be temporally divided and reported.

### 3.1) First trigger example

According to FIG. 11, a MDT measurement instruction request is triggered by an instruction from a user who is the holder of the radio terminal 10. In this case, when the user determines that MDT measurement by its own radio terminal 10 is necessary or effective, the user carries out processing required to make a MDT measurement request on the radio terminal 10 (Operation S11). For example, if the radio terminal 10 is provided with a physical function (e.g., a button) to start making a MDT measurement request, the user can make a MDT measurement request by activating the function (pressing the button), or by activating an application to start making a MDT measurement request, and thereby can send a MDT activation request (Operation S12).

### 3.2) Second trigger example

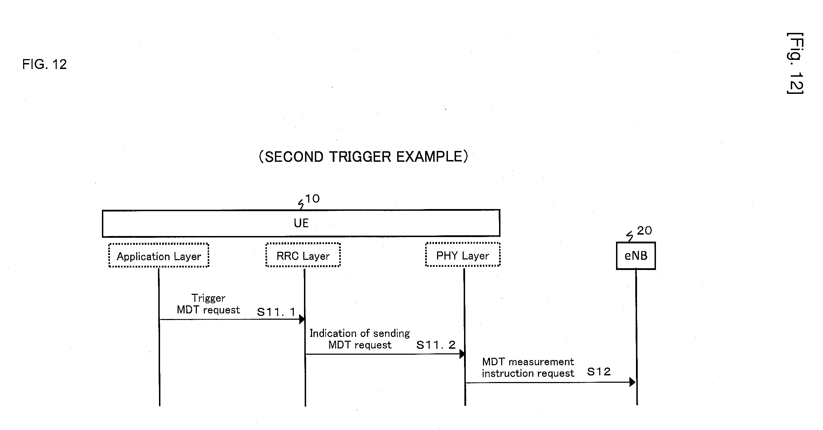

According to FIG. 12, a MDT measurement instruction request is triggered by a request instruction from a higher-level layer (Application Layer) to a lower-level layer (RRC (Radio Resource Control) Layer). First, in the radio terminal 10, Application Layer outputs an indication of making a MDT measurement instruction request to RRC Layer (Operation S11.1; Trigger MDT request).

Next, upon receipt of this indication, RRC Layer outputs to a further lower-level layer, PHY Layer, an instruction to send a MDT measurement request to the radio base station 20 (Operation S11.2; Indication of sending MDT request). Then, in accordance with this instruction, PHY Layer sends a MDT measurement instruction request to the radio base station 20 (Operation S12). Note that the higher-level layer is not necessarily Application Layer but may be NAS (Non Access Stratum) Layer.

### 3.3) Third trigger example

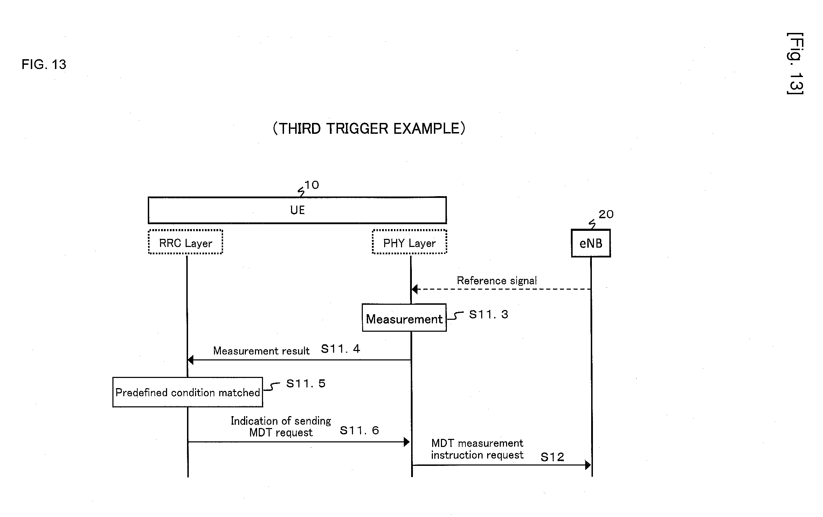

According to FIG. 13, a MDT measurement instruction request is triggered by the fact that the received quality of a downlink signal meets a predefined first condition. First, PHY Layer of the radio terminal 10 measures the received quality of a downlink reference signal from the radio base station 20 (Operation S 11.3) and indicates a result of the measurement to RRC Layer (Operation S 11.4; Measurement result indication).

RRC Layer determines whether or not the measurement result (or a result of performing filtering processing on the measurement result) meets a predefined condition. When the measurement result meets the predefined condition (Operation S11.5; Predefined condition matched), RRC Layer outputs to PHY Layer an instruction to send a MDT measurement request to the radio base station 20 (Operation S11.6; Indication of sending MDT request). Then, in accordance with this instruction, PHY Layer sends a MDT measurement instruction request to the radio base station 20 (Operation S12; UE-initiated MDT request). In the present example, the radio terminal uses RRC Layer to perform processing to include the measurement result in RRC Layer control information, which is then notified to the radio base station. However, the present invention is not limited to this mode. It is also possible to make a configuration such that the measurement result is processed to be included in control information on a layer that can notify it to the radio base station and thereby reported. Further, it is also possible to make a configuration such that the measurement result is processed to be included in PHY Layer control information, without being indicated from PHY Layer to another layer, and thereby reported directly to the radio base station.

Note that the predefined condition regarding received quality used in Operation S11.5 is as follows, for example:
* received quality is lower than a predetermined quality;
* a predetermined period of time (e.g., several minutes to several hours) has passed with received quality remaining degraded and lower than a predetermined quality;
* the radio terminal has been staying in a predetermined area (e.g., an area preregistered for this radio terminal (home cell or the like) or an area pre-indicated from the radio base station) for a predetermined period of time (e.g., several minutes to several hours) with received quality remaining degraded and lower than a predetermined quality; or
* received quality has increased from a level lower than a predetermined quality to a level equal to or higher than the predetermined quality.

Here, the conceivable received quality is the received power of a downlink reference signal (RS), RSRP (RS Received Power), from the radio base station 20 managing the serving cell where UE is staying or the received quality of RS, RSRQ (RS Received Quality). Note that received quality is not limited to that of RS. It is also possible to use another control channel or a data transmission channel. Moreover, the conceivable predetermined quality is a threshold value of RSRP, RSRP_Th [dBm], or a threshold value of RSRQ, RSRQ_Th [dB].

Furthermore, the fact that received quality has increased from a level lower than a predetermined quality to a level equal to or higher than the predetermined quality can be determined by using the value of received quality literally or by using any other equivalent factor. For example, it is also possible to use, as a determination factor, the fact that the radio terminal has got out of a situation where it cannot detect the cell of a radio base station (eNB) to which it (can) belongs (connects) (i.e., the radio terminal can detect the cell), or the like.

### 3.4) Fourth trigger example

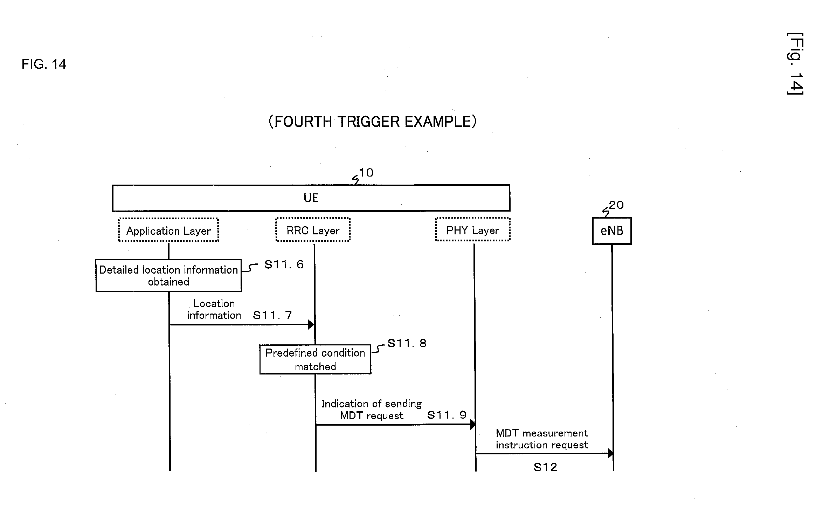

According to FIG. 14, a MDT measurement instruction request is triggered by the fact that information regarding location meets a predefined second condition. First, the user of the radio terminal 10 manually, or the radio terminal 10 automatically (autonomously), obtains detailed location information as the information regarding location on Application Layer (Operation S 11.6; Detailed location information obtained) and indicates the detailed location information to RRC Layer (Operation S11.7; Indication of location information obtainment).

RRC Layer determines whether or not the detailed location information meets a predefined condition. When the predefined condition is met (Operation S11.8; Predefined condition matched), RRC Layer outputs to PHY Layer an instruction to send a MDT measurement instruction request to the radio base station (Operation S11.9; Indication of sending MDT request). Then, in accordance with this instruction, PHY Layer sends a MDT measurement execution instruction request to the radio base station 20 (Operation S12).

Note that the predefined condition regarding location information used in Operation S11.8 is as follows, for example:
* the radio terminal can normally obtain detailed location information; or
* the accuracy of detailed location information obtained by the radio terminal is a predetermined value (e.g., 50%) or higher.

Here, the conceivable detailed location information is detailed location information obtained by GNSS (Global Navigation Satellite System) typified by GPS (Global Positioning Service), detailed location information obtained by a location information service LCS (Location Service), the received qualities of downlink signals of the area (e.g., cell) where the radio terminal is staying and its neighbor areas (cells), or the like.

Moreover, for the accuracy of detailed location information, there is a method for calculating it based on error information (uncertainty) indicated when GPS obtains the latitude, longitude, altitude, and the like. For example, when the error (uncertainty) is 10%, the accuracy is (1-10/100) X 100 = 90%.

On the other hand, instead of the condition that "the accuracy is a predetermined value or higher," it is also possible to set a condition that "the error is a predetermined error value or lower." Further, in addition to the case where location information obtained by GNSS is used as detailed location information, the present invention can also be applied to a case where location information obtained by a location information service LCS (Location Service) supported by a ratio communication network, such as OTDOA (Observed Time Difference Of Arrival). In this case, RRC Layer obtains such detailed location information, determines whether or not the location information meets the predefined condition as described above, and, when yes, makes a MDT measurement request.

### 3.5) Fifth trigger example

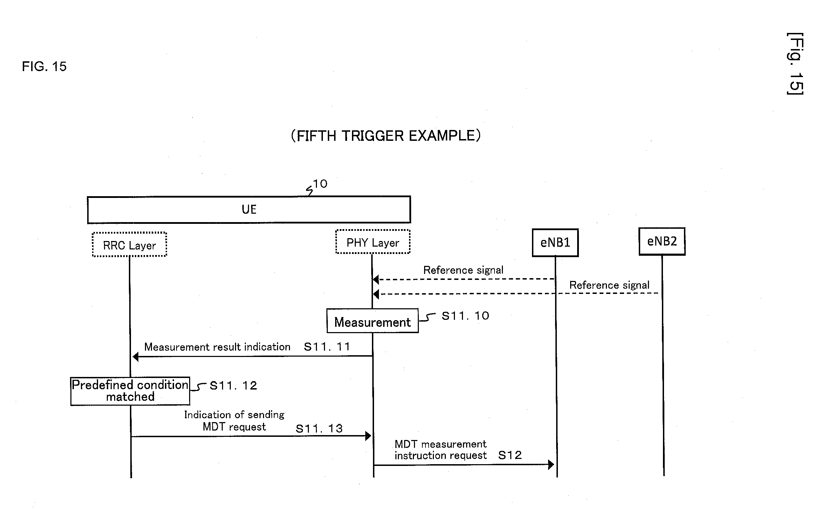

According to FIG. 15, a MDT measurement instruction request is triggered by the fact that a predefined third condition regarding neighbor cell is met. First, PHY Layer of the radio terminal 10 measures the received qualities of downlink reference signals from the radio base station 20 of the serving cell and from a radio base station 21 of a neighbor cell to which the radio terminal 10 cannot (e.g., is not allowed to) connect (belong) (Operation S11.10) and indicates a result of the measurement to RRC Layer (Operation S11.11; Measurement result indication).

RRC Layer determines whether or not the measurement result (or a result of performing filtering processing on the measurement result) meets a predefined condition. When the measurement result meets the predefined condition (Operation S11. 12; Predefined condition matched), RRC Layer outputs to PHY Layer an instruction to send a MDT measurement request to the radio base station 20 (Operation 11.13; Indication of sending MDT request). Then, in accordance with this instruction, PHY Layer sends a MDT measurement instruction request to the radio base station 20 of the serving cell (Operation S12; UE-initiated MDT request).

Note that the predefined condition regarding received quality used in Operation 11.12 is as follows, for example:
* the neighbor cell of the radio base station to which the radio terminal cannot connect (belong) (e.g., non member CSG cell) is the best cell;
* a predetermined period of time (e.g., several minutes to several hours) has passed with the neighbor cell of the radio base station to which the radio terminal cannot connect (belong) remaining the best cell;
* the received quality of the neighbor cell of the radio base station to which the radio terminal cannot connect (belong) is better than the received quality of the serving cell by a predetermined quality difference (e.g., 3 dB) or more; or
* a predetermined period of time has passed with the received quality of the neighbor cell of the radio base station to which the radio terminal cannot connect (belong) remaining better than the received quality of the serving cell by a predetermined quality difference or more.

Here, the conceivable received quality is the received power of a downlink reference signal (RS), RSRP (RS Received Power), from the radio base station 20 managing the serving cell where the radio terminal 10 is staying or from the radio base station 21 managing the neighbor cell, or the received quality of RS, RSRQ (RS Received Quality). Moreover, the conceivable predetermined quality difference is a RSRP difference, RSRP_Delta [dB], or a RSRQ difference, RSRQ_Delta [dB].

### 3.6) Sixth trigger example

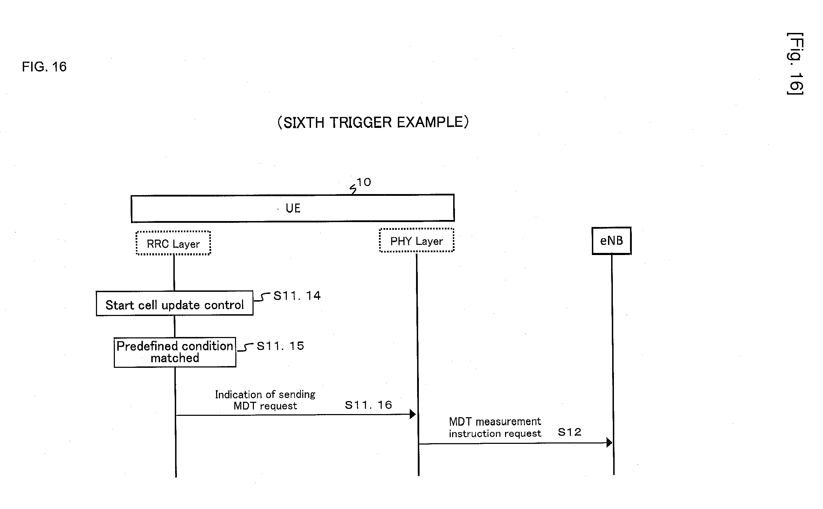

According to FIG. 16, a MDT measurement instruction request is triggered by the fact that a predefined fourth condition regarding cell (re-)selection is met. First, when cell update control is triggered on RRC Layer after a certain period of time has passed in the situation where the radio terminal 10 is staying in the serving cell of the radio base station 20 (Operations 11.14; Cell update procedure triggered), it is determined whether or not a predefined condition is met. When the predefined condition is met (Operation S11.15; Predefined condition matched), an instruction to send a MDT measurement request to the radio base station 20 is output to PHY Layer (Operation S11.16; Indication of sending MDT request). Then, in accordance with this instruction, PHY Layer sends a MDT measurement instruction request to the radio base station 20 of the serving cell (Operation S12; UE-initiated MDT request).

Note that the predefined condition regarding cell (re-)selection used in Operation S11.15 is as follows, for example:
* the radio terminal can detect a cell to which it can connect (belong), getting out of a situation where the radio terminal cannot detect a cell of a radio base station to which it can connect (belong);
* after an attempt to access a radio base station (e.g., HeNB managing a CSG cell) to which the radio terminal cannot connect (belong) failed (was rejected), the radio terminal connects (belongs) to a radio base station to which it can connect (belong);
* cell reselection between different radio access technologies (RAT) (e.g., between LTE and UMTS, between LTE and CDMA 2000, or the like) (Inter-RAT cell reselection) is performed (has been performed);
* handover between different radio access technologies (RAT) (Inter-RAT handover) is performed (has been performed);
* cell reselection between different areas (e.g., different PLMNs) (Inter Area cell reselection) is performed (has been performed);
* handover between different areas (Inter Area handover) is performed (has been performed);
* cell reselection between cells of different attributes (e.g., between a normal cell and a CSG cell) is performed (has been performed); or
* handover between cells of different attributes is performed (has been performed).

### 3.7) Seventh trigger example

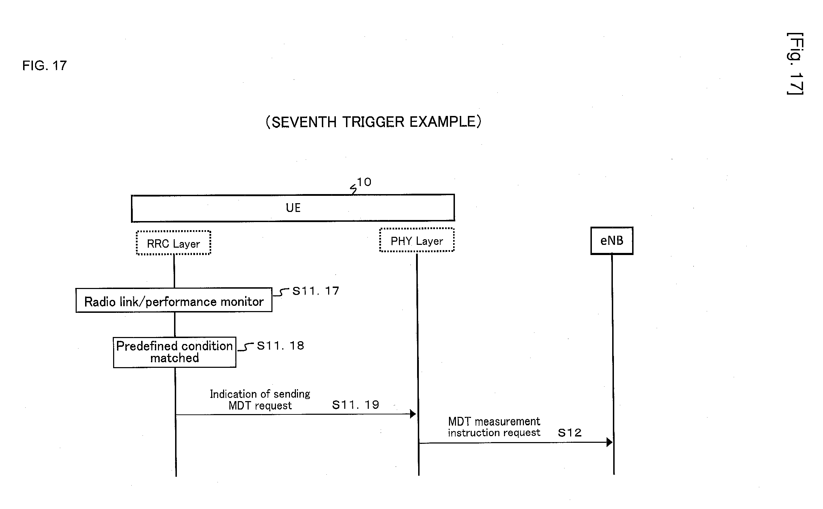

According to FIG. 17, a MDT measurement instruction request is triggered by the fact that a predefined fifth condition regarding communication status is met. First, the radio terminal 10 stays in the cell of the radio base station 20 and monitors communication status such as the state of a radio link and the performance of the radio link (Operation 11.17; Radio Link/Performance monitoring). When a predefined condition regarding communication status is met (Operation S11.18; Predefined condition matched), an instruction to send a MDT measurement request to the radio base station 20 is output to PHY Layer (Operation S11.19; Indication of sending MDT request). Then, in accordance with this instruction, PHY Layer sends a MDT measurement instruction request to the radio base station 20 (Operation S12; UE-initiated MDT request).

Note that the predefined condition regarding communication state used in Operation S11.19 is as follows, for example:
* reconnection to the radio base station is made (has been made) after a radio link failure (RLF) occurred;
* reconnection to the radio base station is made (has been made) after a handover failure (HOF) occurred;
* reception of common control information has consecutively failed a predetermined number of times;
* connection to the radio base station is made (has been made) after reception of common control information consecutively failed a predetermined number of times;
* reception of control information for receiving paging information has consecutively failed a predetermined number of times;
* connection to the radio base station is made (has been made) after reception of control information for receiving paging information consecutively failed a predetermined number of times;
* after an access procedure (e.g., random access) to access the radio base station failed, a retry of the access procedure has succeeded; or
* predetermined quality of service (QoS) is not met.

Here, the conceivable common control information is system information broadcast to all terminals within the cell through Broadcast Control Channel (BCCH).

### 3.8) Effects

As described above, according to the first example of the present invention, when a user carrying a radio terminal thinks that MDT measurement is necessary, or when a radio terminal autonomously determines that MDT measurement is necessary, a MDT measurement execution activation request can be indicated from the radio terminal to a radio communication network (a radio base station/base station controller or a higher-level station such as radio communication network operation management apparatus). In response to receipt of this MDT measurement instruction request, if the radio communication network side determines that MDT measurement by this radio terminal is necessary, the radio communication network side can perform control to allow the radio terminal to actually execute MDT measurement reporting. Thus, the radio communication network side can collect received quality of and location information (detailed location information and the like) on an area (such as a cell) with a problem regarding coverage, and optimal coverage mapping can be realized by using the collected information. The present invention is particularly effective when there is a problem with coverage, such as in a closed area where only limited radio terminals can stay.

### 4. Second example

In the above-described first example, the radio communication network operation management apparatus (EM) 40 receives a MDT measurement instruction request from the radio terminal 10 and determines whether or not to allow this radio terminal to report MDT measurement. However, it is also possible that this determination is performed by MME/HSS 30.

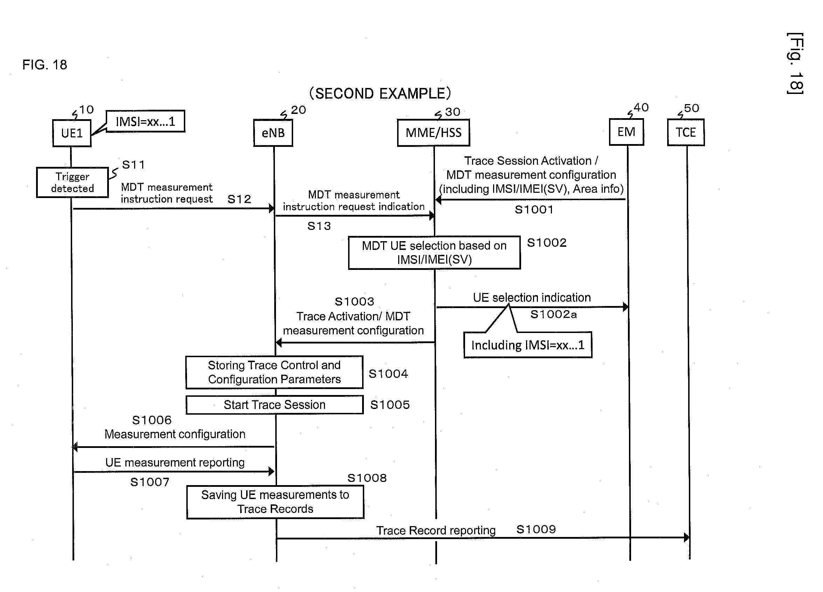

FIG. 18 shows a MDT measurement sequence according to a second example. The different point from the first example shown in FIG. 10 is that MME/HSS 30 that has received an indication of a MDT measurement execution activation request from a radio terminal 10 via a radio base station 20 activates control to allow this radio terminal 10 to execute MDT measurement reporting. The sequence shown in FIG. 18 illustrates an example in which MME/HSS 30 receives a MDT measurement execution activation request from the radio terminal 10 having a terminal ID (IMSI/IMEI (SV) or the like) which has not been indicated beforehand from the radio communication network operation management apparatus (EM) 40. Note that operations similar to those in FIG. 10 are denoted by the same reference signs as in FIG. 10, and a description thereof will be simplified.

First, MME/HSS 30 activates MDT measurement reporting control for control target radio terminals based on radio terminal IDs indicated by the radio communication network operation management apparatus 40 in Operation S1001. However, in this example, the radio terminal 10 (i.e., UE1) is not included in the control target radio terminals.

In this case, MME/HSS 30, based on the ID (IMESI = {xx...1}) of the radio terminal 10 from which a MDT measurement execution activation request is received, selects this radio terminal 10 as a target to allow to report MDT measurement (Operation S1002; MDT UE selection based on IMESI/IMEI (SV)). Then, MME/HSS 30 indicates to the radio communication network operation management apparatus 40 that the radio terminal 10 is selected as a target to instruct MDT measurement reporting, along with the ID (IMSI = {xx...1}) of the radio terminal 10 (Operation S1002a; UE selection indication).

Since the subsequent Operations S1003 to S1009 are as already described with reference to FIG. 2, a description thereof will be omitted.

According to the second example, MME/HSS 30 determines whether or not to allow a radio terminal (UE) that has requested MDT measurement execution to actually report MDT measurement. Accordingly, it is possible to respond to the request more quickly than the case where the radio communication network operation management apparatus 40 determines.

### 5. Modification example

In the above-described first and second examples, Immediate MDT in Signaling based approach is illustrated as a mode of MDT. However, it is also possible to use Logged MDT instead of Immediate MDT. In the case of using Logged MDT, a radio terminal (UE) executes MDT measurement logging in accordance with Logged MDT configuration (transmitted in the form of a message called Logged MDT Configuration, Logged Measurement Configuration, or the like) designated by a radio base station (eNB).

On the other hand, it is also possible for a radio terminal (UE) to select any one of MDTs (Immediate MDT or Logged MDT) when the radio terminal (UE) makes a MDT measurement execution request. A conceivable method for implementing this is, for example, a method in which a 1-bit flag (0: Immediate MDT, 1: Logged MDT) is transmitted by using RRC message, or a method in which information directly indicating Immediate MDT or Logged MDT is transmitted.

Moreover, it is also possible to use Management based approach instead of Signaling based approach. In this case, a radio base station (eNB) or MME/HSS managing a radio terminal that has received a MDT measurement execution request determines whether or not MDT measurement reporting is necessary and, when determines that it is necessary, activates a control of MDT measurement reporting for the radio terminal (UE) from which the request is received.

Furthermore, in the above-described first and second examples, it is assumed that a radio terminal (UE) that requests MDT measurement execution (makes a MDT measurement instruction request) has already completed connection to a radio base station (eNB) (that is, UE is in active state (RRC_Connected)). However, the present invention can also be applied, as a matter of course, in a case where a radio terminal (UE) in idle state (RRC_Idle) requests MDT measurement execution. In such a case, a conceivable method is that, to transit from idle state to active state as in general cases, a procedure for establishing a radio connection to a radio base station (eNB) (RRC Connection Setup Procedure, RRC Connection Reestablishment procedure, or the like) is first performed, and thereafter the processing shown in the above-described first or second example is performed. In this case, for example, information indicating the request (a 1-bit flag or the like) is notified by using RRC message. In addition, the request also can be made when the procedure for establishing a radio connection is performed. For example, information indicating the request (a 1-bit flag or the like) may be notified by being included in RRC Connection Request message, RRC Connection Setup Complete message, RRC Connection Reestablishment Request message, RRC Connection Reestablishment Complete message, or the like.

### 6. Third example

According to a third example, a radio communication network side indicates to a radio terminal (UE) a predefined trigger condition for making a MDT measurement instruction request. This information to be indicated may be details of the trigger condition or may be only a required configuration value (a parameter such as a threshold value). However, the scope of application of the present invention is not limited to these.

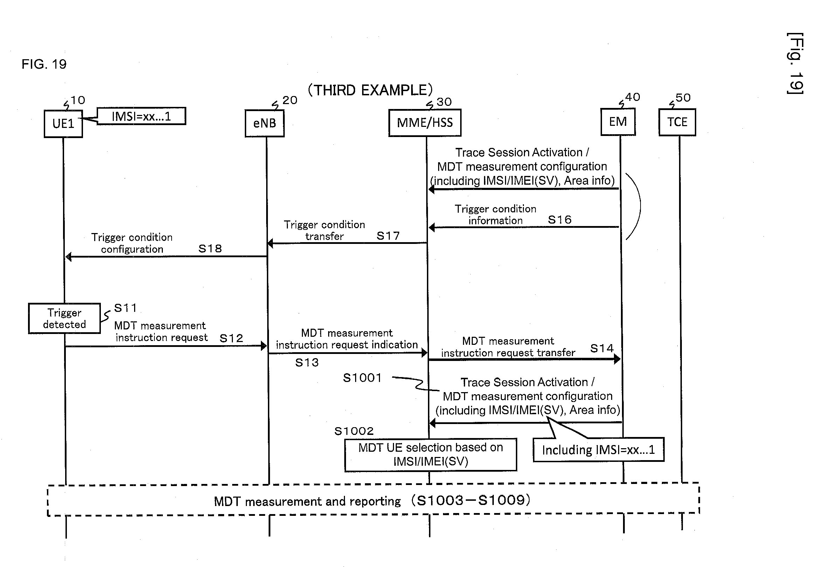

Referring to FIG. 19, a sequence according to the third example is as follows.

Operation S16: A radio communication network operation management apparatus 40 indicates to MME/HSS a condition regarding a trigger required for UE to make a MDT measurement execution request (Trigger condition information). However, although Operation S16 is described as an independent operation here, it is also possible that the trigger condition information is included in a trace session activation message to be indicated to HSS by the radio communication network operation management apparatus 40, as described already. HSS transfers the trace session execution message to MME managing the area (e.g., Tracking Area TA) where the target UE is staying. However, in FIG. 19, the messages from EM to HSS and from HSS to MME are omitted, and the messages are shown as a message from EM to MME/HSS. MME selects UE to allow to actually obtain and report MDT measurement information, based on the ID (IMSI/IMEI (SV)) of UE indicated from EM.

Operation S 17: MME/HSS 30 transfers to a radio base station 20 the trigger condition information indicated from the radio communication network operation management apparatus 40 (Trigger condition transfer).

Operation S18: The radio base station 20 broadcasts the trigger condition information to a covered radio terminal 10 (UE1) (Trigger configuration). Note that it is also conceivable to use a method in which the information is individually notified to an arbitrarily selected UE or a method in which the information is individually notified to a specific UE indicated by a higher-level station such as EM or MME/HSS. In the case of applying these methods, RRC message is used instead of broadcast information. Moreover, in the case where EM or MME/HSS indicates UE, the ID of UE may be notified as in Signaling based approach, or UE to which the condition regarding this trigger is to be indicated may be differentiated for notification.

When the trigger condition is thus configured to the radio terminal 10, Operations

S11 to S 14 and Operations S1001 and S1009 are performed as described already in the first example.

As described above, according to the third example, it is possible to configure a trigger condition to the radio terminal 10 so that the radio communication network side can collect information required. Accordingly, control is performed so as to instruct the radio terminal (UE) to actually execute MDT measurement reporting, whereby it is possible to collect received quality of and location information (detailed location information and the like) on an area (such as a cell) with a problem of coverage, and it is possible to realize optimal coverage mapping by using the collected information.

### 7. Fourth example

According to a fourth example, a radio communication network side indicates to a radio terminal (UE) an instruction activating a predefined trigger condition for making a MDT measurement instruction request. For this activation instruction, an activation flag (e.g., 1 bit) may be indicated, or the type of a trigger to be activated (or information that can be understood on the UE side) may be indicated. However, the scope of application of the present invention is not limited to these.

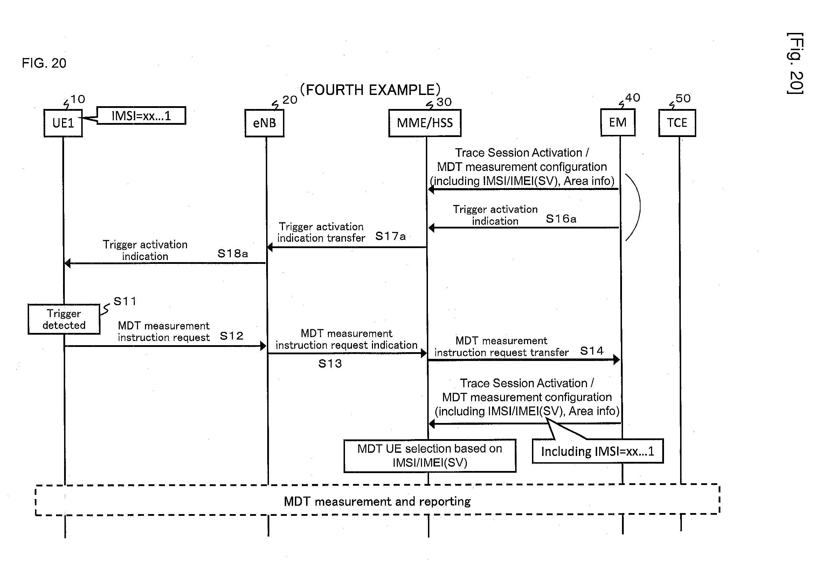

Referring to FIG. 20, a sequence according to the fourth example is as follows.

Operation S16a: A radio communication network operation management apparatus 40 indicates to MME/HSS 30 an instruction activating a MDT measurement instruction request based on a predefined trigger (Trigger Activation). However, although Operation S16a is described as an independent operation here, it is also possible that this trigger activation instruction is included in a trace session activation message to be indicated to HSS by the radio communication network operation management apparatus 40, as described already. HSS transfers the trace session execution message to MME managing the area (e.g., Tracking Area TA) where a target UE is staying. However, in FIG. 20, the messages from EM to HSS and from HSS to MME are omitted, and the messages are shown as a message from EM to MME/HSS. MME selects UE to allow to actually obtain and report MDT measurement information, based on the ID (IMSI/IMEI (SV)) of UE indicated from EM.

Operation S17a: MME/HSS 30 transfers to a radio base station 20 the trigger activation instruction indicated from the radio communication network operation management apparatus 40 (Trigger Activation transfer).

Operation S18a: The radio base station 20 broadcasts the trigger activation instruction to a radio terminal 10 (UE1) staying in a cell served by the radio base station 20 (Trigger Activation Indication). Note that it is also conceivable to use a method in which the instruction is individually notified to an arbitrarily selected UE or a method in which the instruction is individually notified to a specific UE indicated by a higher-level station such as EM or MME/HSS. In the case of applying these methods, RRC message is used instead of broadcast information. Moreover, in the case where EM or MME/HSS designates UE, the ID of UE may be notified as in Signaling based approach, or UE to which the condition regarding this trigger to be indicated may be differentiated for notification.

When the trigger condition is thus set to the radio terminal 10, Operations S11 to S 14 and Operations S1001 and S1009 are performed as already described in the first example.

As described above, according to the fourth example, a trigger condition is set to the radio terminal 10 so that the radio communication network side can collect information required, and an instruction activating the trigger condition is sent, whereby it is possible for the radio communication network side to collect required information when necessary. Accordingly, control is performed so as to instruct the radio terminal (UE) to actually execute MDT measurement reporting, whereby it is possible to collect received quality of and location information (detailed location information and the like) on an area (such as a cell) with a problem of coverage, and it is possible to realize optimal coverage mapping by using the collected information.

### 8. Second illustrative embodiment

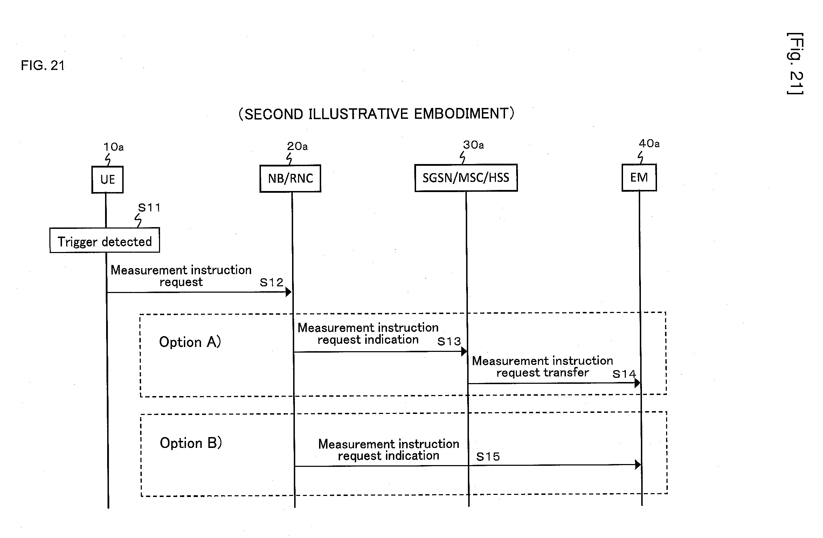

Referring to FIG. 21, assumed here is a 3GPP UMTS radio communication system, which includes a radio terminal (UE) 10a, a radio base station/base station controller (NB/RNC) 20a, a serving GPRS support node (also referred to as SGSN server)/mobile (communication) switching center (also referred to as MSC server)/home subscriber management server (SGSN/MSC/HSS) 30a, a radio communication network operation management apparatus (EM) 40a, and a trace information collection apparatus (TCE: Trace Collection Entity) (not shown).

In response to occurrence of a predefined trigger at the radio terminal 10a, (Operation S11: "Trigger detected"), the radio terminal 10a sends NB/RNC 20a a request (measurement instruction request) for an instruction to execute MDT measurement (Operation S12: "UE-initiated MDT request").

Further, in an embodiment, as shown in FIG. 21 at Option A), NB/RNC 20a that has received the MDT measurement instruction request indicates the request to SGSN/ MSC/HSS 30a (Operation S13: MDT request indication), and SGSN/MSC/HSS 30a further transfers it to the radio communication network operation management apparatus (EM) 40a (Operation S 14: MDT request transfer). Moreover, as shown in FIG. 21 at Option B), it is also possible that NB/RNC 20a that has received the MDT measurement execution request indicates the request directly to the radio communication network operation management apparatus 40a (Operation S15). Thereby, the higher-level radio communication network node (SGSN/MSC/HSS or EM) controlling MDT measurement can recognize the MDT measurement execution request made by the radio terminal 10a. The higher-level radio communication network node (SGSN/MSC/HSS or EM) that has recognized the request instructs the radio terminal 10a to execute MDT measurement as needed. Thereby, in a situation where it is determined that execution of MDT measurement on the radio terminal side is necessary, or in a situation where it is desired to execute MDT measurement, it is possible for the radio communication network side to recognize such a situation and appropriately handle the situation.

The functional configurations of the radio terminal (UE) and each radio communication network node in the radio communication system according to the second illustrative embodiment of the present invention are similar to those shown in FIGS. 5 and 7 to 9, and therefor illustration thereof is omitted. Note that the configuration of NB/RNC 20a is similar to the configuration of eNB shown in FIG. 7, and the configuration of SGSN/MSC/HSS 30a is similar to the configuration of MME/HSS shown in FIG. 8. Although there are minute differences such as a physical interface existing between NB and RNC because NB and RNC are different nodes basically, there are no significant functional differences in terms of application of the present invention.

### 9. Fifth example

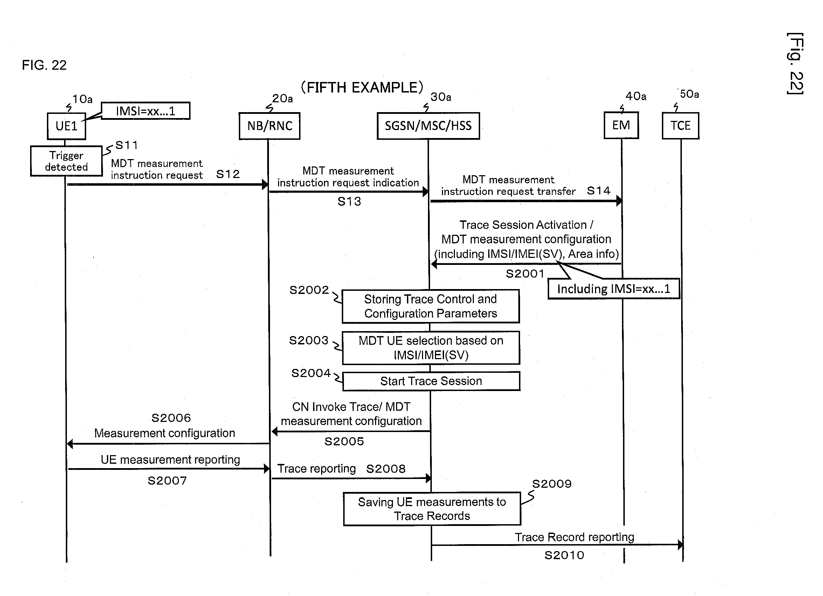

FIG. 22 is a sequence diagram of MDT when a radio terminal (UE) makes a MDT measurement execution request in a fifth example. Here, a case is assumed in which a radio terminal UE1 having IMSI (International Mobile Subscriber Identity) = {xx...1} as a terminal ID (Identity) makes a MDT measurement execution request. Note that another terminal identity such as IMEI (SV) (International Mobile station Equipment Identity (Software Version)) may be used instead of IMSI. A MDT measurement activation procedure according to the present example is as follows.
Operation S11: The radio terminal UE1 detects that a predefined trigger condition is met (Trigger detected).
Operation S 12: The radio terminal UE1 sends NB/RNC 20a a MDT measurement execution request (UE-initiated MDT request).
Operation S13: In response to receipt of the MDT activation request, NB/RNC 20a indicates to SGSN/MSC/HSS 30a that the MDT measurement execution request is received (MDT request indication).
Operation S 14: SGSN/MSC/HSS 30a transfers the indication of the MDT measurement instruction request to EM 40a (MDT request transfer). In this event, SGSN/ MSC/HSS 30a also indicates to EM 40a the ID (IMSI = {xx...1}) of the radio terminal UE1.
In FIG. 22, Immediate MDT in Signaling based approach is executed through the following operations.
Operation S2001: EM 40a indicates to HSS a trace session activation message including, as information required to execute MDT in Signaling base approach, MDT measurement configuration information, the ID (IMSI or IMEI (SV): International Mobile station Equipment Identity (Software Version)) of UE to allow to obtain and report measurement information, MDT target location information (Area info), and the like. HSS transfers the trace session execution message to GSN/MSC managing the area (e.g., Tracking Area TA) where the target UE1 is staying. In FIG. 22, the messages from EM to HSS and from HSS to SGSN/MSC are omitted, and the messages are shown as a message from EM 40a to SGSN/MSC/HSS 30a.
Operation S2002: SGSN/MSC/HSS 30a stores trace control information and configuration parameters (Storing Trace Control and Configuration Parameters).
Operation S2003: Based on the ID (IMSI = {xx...1}) of UE indicated, UE to be allowed to actually execute MDT measurement reporting is selected (MDT UE selection based on IMSI). In FIG. 22, since IMSI = {xx...1} is indicated from EM, SGSN/MSC/HSS 30a selects UE1.
Operation S2004: Trace function is started (Start Trace Session).
Operation S2005: SGSN/MSC/HSS 30a indicates to NB/RNC 20a to which UE1 is connecting the start of trace function execution (CN Invoke Trace/MDT measurement configuration) and MDT measurement configuration information with respect to this UE1.
Operation S2006: Based on the trace control information and configuration parameters indicated, NB/RNC 20a sends UE1 a message instructing to execute MDT measurement reporting (Measurement configuration).
Operation S2007: UE1 executes MDT measurement according to the instruction and reports obtained measurement information to NB/RNC 20a at a predetermined timing (UE measurement reporting).
Operation S2008: NB/RNC 20a indicates the measurement information reported by UE1 to SGSN/MSC/HSS 30a (Trace reporting).
Operation S2009: SGSN/MSC/HSS 30a stores the measurement information in memory for trace (Trace Records) (Saving UE measurements to Trace Records).
Operation S2010: SGSN/MSC/HSS 30a reports the stored Trace Records to TCE at a predetermined timing (e.g., via periodic reporting) (Trace Record reporting).

Conceivable triggers for the radio terminal (UE) to make a MDT measurement execution request are similar to those described in the first example. However, when used is the trigger that a predefined condition regarding received quality is met, the conceivable received quality is the received power RSCP (Received Signal Code Power) of a downlink pilot signal (also referred to as common pilot channel CPICH) from a radio base station (NB) managing the serving cell where the radio terminal (UE) is staying, or the received quality of CPICH (Received energy per chip divided by the power density in the band: Ec/No) (Ec/No is sometimes regarded as an abbreviation of Ratio of energy per modulating bit to the noise spectral density). Moreover, the conceivable predetermined quality is a CPICH RSCP threshold value, RSCP_Th [dBm], or an Ec/No threshold value, Ec/No_Th [dB].

Through control as shown in the above-described fifth example, a MDT measurement execution request can be indicated from UE to a radio communication network (NB/RNC, a higher-level station, a radio communication network operation management apparatus, or the like) when a user carrying the radio terminal (UE) thinks that MDT measurement is necessary, or when UE autonomously determines that MDT measurement is necessary. Moreover, when the radio communication network side determines it to be necessary, it is possible to perform control to instruct the radio terminal (UE) to actually execute MDT measurement reporting. As a result, it is possible to collect received quality of and location information (detailed location information and the like) on an area (such as a cell) with a problem of coverage, and it is possible to realize optimal coverage mapping by using the collected information. Moreover, it is possible to realize coverage optimization with taking into consideration even received quality of a closed area where only limited radio terminals (UE) stay and collection of received quality has hitherto been difficult.

### 10. Modification example

In the above-described fifth example, Immediate MDT in Signaling based approach is illustrated as a mode of MDT. However, it is also possible to use Logged MDT instead of Immediate MDT. In the case of using Logged MDT, a radio terminal (UE) executes MDT measurement logging in accordance with Logged MDT configuration (transmitted in the form of a message called Logged MDT Configuration, Logged Measurement Configuration, or the like) designated by a radio base station (NB)/base station controller (RNC).

On the other hand, it is also possible for a radio terminal (UE) to select any one of MDTs (Immediate MDT or Logged MDT) when the radio terminal (UE) makes a MDT measurement execution request. A conceivable method for implementing this is, for example, a method in which a 1-bit flag (0: Immediate MDT, 1: Logged MDT) is transmitted by using RRC message, or a method in which information directly indicating Immediate MDT or Logged MDT is transmitted.

Moreover, it is also possible to use Management based approach instead of Signaling based approach. In this case, a radio base station (NB)/base station controller (RNC) or a serving GPRS support node (SGSN)/mobile (communication) switching center (MSC)/home subscriber server (HSS) that has received a MDT measurement execution request determines whether or not MDT measurement reporting is necessary and, when determines that it is necessary, activates MDT measurement reporting control for the radio terminal (UE) from which the request is received.

Furthermore, in the above-described fifth example, it is assumed that a radio terminal (UE) that requests MDT measurement execution has already completed connection to a radio base station (NB)/base station controller (RNC) (that is, UE is in active state (UTRA RRC Connected mode)). However, the illustrative methods can also be applied, as a matter of course, in a case where a radio terminal (UE) in idle state (Idle mode) requests MDT measurement execution. In such a case, a conceivable method is that, to transit from idle state to active state as in general cases, a procedure for establishing a radio connection to a radio base station (NB)/base station controller (RNC) (RRC Connection Setup Procedure or the like) is first performed, and thereafter the processing shown in the above-described fifth example is performed. In this case, for example, information indicating the request (a 1-bit flag or the like) is notified by using RRC message. In addition, the request also can be made when the procedure for establishing a radio connection is performed. For example, information indicating the request (a 1-bit flag or the like) may be notified by being included in RRC Connection Request message, RRC Connection Setup Complete message, RRC Connection Reestablishment Request message, RRC Connection Reestablishment Complete message, or the like.

Further, a description of the first and second illustrative embodiments has been given on the assumption that 3GPP LTE or UMTS is used as a radio communication system. However, these are not intended to be limiting. The systems and methods described herein are also applicable to GSM (Global System for Mobile communications), WiMAX (Worldwide interoperability for Microwave Access), and the like.

### 11. Supplementary notes

An illustrative embodiment is applicable to 3GPP mobile communication systems and the like. The inventive concept may be embodied in other specific forms. The above-described illustrative embodiment and examples are therefore to be considered in all respects as illustrative and not restrictive, the scope of the inventive concept being indicated by the appended claims rather than by the foregoing description, and all changes which come within the meaning and range of equivalency of the claims are therefore intended to be embraced therein. Part or all of the above-described illustrative embodiments can also be described as, but are not limited to, the following supplementary notes.

### (Supplementary note 1)

A radio terminal that can communicate with a radio station, comprising:
a measurement instruction request section that transmits a signal requesting a measurement instruction to the radio station;
a measurement section that performs measurement according to the measurement instruction received from the radio station; and
a reporting section that transmits to the radio station a signal reporting a measurement result and information regarding location of the radio terminal.

### (Supplementary note 2)

The radio terminal according to supplementary note 1, wherein the measurement instruction request section transmits the signal requesting a measurement instruction in response to occurrence of a trigger at the terminal.

### (Supplementary note 3)

The radio terminal according to supplementary note 2, wherein the trigger at the terminal occurs due to a measurement instruction request operation by a user of the radio terminal or occurs from RRC (Radio Resource Control) Layer or a higher-level layer than RRC Layer within the radio terminal.

### (Supplementary note 4)

The radio terminal according to supplementary note 3, wherein the measurement instruction request section detects the occurrence of the trigger at the terminal, based on at least one of received quality of a downlink signal received from the radio station, the information regarding location, information regarding neighbor cell, information regarding cell selection, and information regarding communication status.

### (Supplementary note 5)

The radio terminal according to supplementary note 4, wherein the measurement instruction request section detects the occurrence of the trigger at the terminal when the received quality is degraded to fall below a predetermined value, when the degradation of the received quality continues for a predetermined period of time or more, or when the received quality recovers to exceed the predetermined value.

### (Supplementary note 6)

The radio terminal according to supplementary note 4 or 5, wherein the measurement instruction request section detects the occurrence of the trigger at the terminal at least any one of when the information regarding location indicates a predetermined area, when the information regarding location can be obtained, and when accuracy of the information regarding location is a predetermined value or higher.

### (Supplementary note 7)

The radio terminal according to supplementary note 6, wherein the information regarding location includes location information obtained by using GNSS (Global Navigation Satellite System) or a location information service LCS (Location Service) supported by a radio communication network including the radio station.

### (Supplementary note 8)

The radio terminal according to any one of supplementary notes 2-7, wherein a condition of the occurrence of the trigger at the terminal is notified by the radio station.

### (Supplementary note 9)

The radio terminal according to any one of supplementary notes 1-8, wherein the information regarding location is obtained before the measurement instruction is requested.

### (Supplementary note 10)

The radio terminal according to any one of supplementary notes 1-9, wherein when the measurement instruction request section requests the measurement instruction, the radio terminal transits from idle state (RRC_Idle) to active state (RRC_Connected) and transmits the measurement instruction request by using a connection establishment request message to the radio station or a connection establishment complete message thereto.

### (Supplementary note 11)

A communication control method in a radio terminal that can communicate with a radio station, comprising:
transmitting a signal requesting a measurement instruction to the radio station;
performing measurement according to the measurement instruction received from the radio station; and
transmitting to the radio station a signal reporting a measurement result and information regarding location of the radio terminal.

### (Supplementary note 12)

The communication control method according to supplementary note 11, wherein the signal requesting a measurement instruction is transmitted in response to occurrence of a trigger at the terminal.

### (Supplementary note 13)

The communication control method according to supplementary note 12, wherein the trigger at the terminal occurs due to a measurement instruction request operation by a user of the radio terminal or occurs from RRC (Radio Resource Control) Layer or a higher-level layer than RRC Layer within the radio terminal.

### (Supplementary note 14)

The communication control method according to supplementary note 13, wherein the occurrence of the trigger at the terminal is detected based on at least one of received quality of a downlink signal received from the radio station, the information regarding location, information regarding neighbor cell, information regarding cell selection, and information regarding communication state.

### (Supplementary note 15)

The communication control method according to supplementary note 14, wherein the occurrence of the trigger at the terminal is detected when the received quality is degraded to fall below a predetermined value, when the degradation of the received quality continues for a predetermined period of time or more, or when the received quality recovers to exceed the predetermined value.

### (Supplementary note 16)

The communication control method according to supplementary note 14 or 15, wherein the occurrence of the trigger at the terminal is detected at least any one of when the information regarding location indicates a predetermined area, when the information regarding location can be obtained, and when accuracy of the information regarding location is a predetermined value or higher.

### (Supplementary note 17)

The communication control method according to supplementary note 16, wherein the information regarding location includes location information obtained by using GNSS (Global Navigation Satellite System) or a location information service LCS (Location Service) supported by a radio communication network including the radio station.

### (Supplementary note 18)

The communication control method according to any one of supplementary notes 11-17, wherein the information regarding location is obtained before the measurement instruction is requested.

### (Supplementary note 19)

The communication control method according to any one of supplementary notes 12-18, characterized in that a condition of the occurrence of the trigger at the terminal is indicated from the radio station.

### (Supplementary note 20)

The communication control method according to any one of supplementary notes 11-19, wherein when the measurement instruction is requested, the radio terminal transits from idle state (RRC_Idle) to active state (RRC_Connected) and transmits the measurement instruction request by using a connection establishment request message to the radio station or a connection establishment complete message thereto.

### (Supplementary note 21)

A radio communication system including a radio station and a radio terminal that can communicate with the radio station, wherein
the radio terminal transmits a signal requesting a measurement instruction to the radio station;
the radio terminal performs measurement according to the measurement instruction received from the radio station; and
the radio terminal transmits to the radio station a signal reporting a measurement result and information regarding location of the radio terminal.

### (Supplementary note 22)

The radio communication system according to supplementary note 21, wherein the radio terminal is a mobile terminal, and the radio station is a radio base station or a base station controller.

### (Supplementary note 23)

A radio station that can communicate with a radio terminal, comprising:
an instruction transmission section that transmits a signal including a measurement instruction to the radio terminal;
a storage section that stores a measurement result and information regarding location of the radio terminal received from the radio terminal; and
an information transmission section that transmits the measurement result and the information regarding location to an information collection apparatus of a radio communication network.

### (Supplementary note 24)

A control apparatus that can communicate with a radio station, comprising:
a reception section that receives from the radio station a measurement instruction request signal transmitted from a radio terminal;
a control section that determines, in response to the measurement instruction request signal, whether or not a measurement result by the radio terminal is necessary; and
a transmission section that, when it is determined that the measurement result is necessary, transmits a measurement instruction signal to the radio terminal.

### (Supplementary note 25)

The control apparatus according to supplementary note 24, wherein the control section configures a trigger condition for determining whether to request the measurement instruction from the radio terminal.

### (Supplementary note 26)

The control apparatus according to supplementary note 24 or 25, wherein the control section transmits an instruction of enabling a trigger condition for determining whether to request the measurement instruction which has been configured in the radio terminal.

### (Supplementary note 27)

A communication method in a radio communication system which includes a network including a radio station and a radio communication network operation management apparatus and a radio terminal that can communicate with the radio station, the method comprising:
at the radio terminal, transmitting a signal requesting a measurement instruction to the radio station;
at the radio station, transferring the measurement instruction request to the radio communication network operation management apparatus;
at the radio communication network operation management apparatus, transmitting the measurement instruction to the radio terminal via the radio station;
at the radio terminal, performing measurement according to the measurement instruction received from the radio station; and
at the radio terminal, transmitting to the radio station a signal reporting a measurement result and information regarding location of the radio terminal.

### (Supplementary note 28)

A non-transitory computer readable information storage medium storing a program executed by a program-controlled processor in a radio terminal that can communicate with a radio station, the program performs a method comprising:
transmitting a signal requesting a measurement instruction to the radio station;
performing measurement according to the measurement instruction received from the radio station; and
transmitting to the radio station a signal reporting a measurement result and information regarding location of the radio terminal.

## Claims

1. A radio terminal (10) configured to communicate with a radio station (20), comprising:
a control unit (103) configured to transmit, to the radio station (20), a signal requesting a Minimization of Drive Test, MDT, measurement instruction from the radio station (20);
a measurement unit (104) configured to perform MDT measurement in response to receiving the MDT measurement instruction from the radio station (20); and
a transmission unit (106) configured to transmit, to the radio station (20), a signal reporting a MDT measurement result and information regarding location of the radio terminal (10).

2. The radio terminal (10) according to claim 1, wherein the control unit (103) is configured to transmit the signal requesting the MDT measurement instruction in response to occurrence of a trigger at the radio terminal (10).

3. The radio terminal (10) according to claim 2, wherein the trigger at the radio terminal (10) occurs due to a MDT measurement instruction request operation by a user of the radio terminal (10) or occurs due to a MDT measurement instruction request received from RRC, Radio Resource Control, Layer or a higher-level layer than RRC Layer within the radio terminal (10).

4. The radio terminal (10) according to claim 3, wherein the control unit (103) is configured to detect the occurrence of the trigger at the radio terminal (10), based on at least one of a received quality of a downlink signal received from the radio station (20), the information regarding location, information regarding neighbor cell, information regarding cell selection, and information regarding communication status.

5. The radio terminal (10) according to claim 4, wherein the control unit (103) is configured to detect the occurrence of the trigger at the radio terminal (10) when the received quality is degraded to fall below a predetermined value, when the degradation of the received quality continues for a predetermined period of time or more, or when the received quality recovers to exceed the predetermined value.

6. The radio terminal (10) according to claim 4, wherein the control unit (103) is configured to detect the occurrence of the trigger at the radio terminal (103) based on at least one of when the information regarding location indicates a predetermined area, when the information regarding location can be obtained, and when accuracy of the information regarding location is a predetermined value or higher.

7. The radio terminal (10) according to claim 6, wherein the information regarding location includes location information obtained by using a Global Navigation Satellite System or a Location Service, LCS, supported by a radio communication network including the radio station.

8. The radio terminal (10) according to any one of claims 2-7, wherein a condition of the occurrence of the trigger at the radio terminal (10) is notified by the radio station (20).

9. The radio terminal (10) according to any one of claims 1-8, wherein the information regarding location is obtained before transmitting the signal requesting the MDT measurement instruction.

10. The radio terminal (10) according to any one of claims 1-9, wherein the radio terminal (10) is configured to, when the control unit (103) requests the MDT measurement instruction, transition from an idle state, RRC_Idle, to an active state, RRC_Connected, and transmit the measurement instruction request by using a connection establishment request message to the radio station (20) or a connection establishment complete message to the radio station (20).

11. A communication control method performed by a radio terminal (10) configured to communicate with a radio station (20), comprising:
transmitting (S1), to the radio station (20), a signal requesting a Minimization of Drive Test, MDT, measurement instruction from the radio station (20);
performing MDT measurement (S3) in response to receiving the MDT measurement instruction from the radio station (20); and
transmitting (S4) to the radio station (20) a signal reporting a MDT measurement result and information regarding location of the radio terminal (10).

12. The communication control method according to claim 11, wherein the signal requesting the MDT measurement instruction is transmitted in response to occurrence of a trigger at the radio terminal (10).

13. The communication control method according to claim 12, wherein the trigger at the radio terminal (10) occurs due to a measurement instruction request operation by a user of the radio terminal (10) or occurs due to a MDT measurement instruction request received from RRC, Radio Resource Control, Layer or a higher-level layer than RRC Layer within the radio terminal (10).

14. The communication control method according to claim 13, wherein the occurrence of the trigger at the radio terminal (10) is detected based on at least one of a received quality of a downlink signal received from the radio station (20), the information regarding location, information regarding neighbor cell, information regarding cell selection, and information regarding communication status.

15. The communication control method according to claim 14, wherein the occurrence of the trigger at the radio terminal (10) is detected when the received quality is degraded to fall below a predetermined value, when the degradation of the received quality continues for a predetermined period of time or more, or when the received quality recovers to exceed the predetermined value.

16. The communication control method according to claim 14, wherein the occurrence of the trigger at the radio terminal (10) is detected based on at least one of when the information regarding location indicates a predetermined area, when the information regarding location can be obtained, and when accuracy of the information regarding location is a predetermined value or higher.

17. The communication control method according to claim 16, wherein the information regarding location includes location information obtained by using a Global Navigation Satellite System or a Location Service, LCS, supported by a radio communication network including the radio station (20).

18. The communication control method according to any one of claims 11-17, wherein the information regarding location is obtained before transmitting the signal requesting the MDT measurement instruction.

19. The communication control method according to any one of claims 12-17, wherein a condition of the occurrence of the trigger at the radio terminal (10) is indicated from the radio station (20).

20. The communication control method according to any one of claims 11-19, wherein, when the measurement instruction is requested, the radio terminal (10) transitions from an idle state, RRC_Idle, to an active state, RRC_Connected, and transmits the MDT measurement instruction request by using a connection establishment request message to the radio station (20) or a connection establishment complete message thereto.

21. A radio station (20) configured to communicate with a radio terminal (10), comprising:
a reception unit (201) configured to receive, from the radio terminal (10), a signal requesting a Minimization of Drive Test, MDT, measurement instruction;
a transmission unit (207) configured to transmit, to the radio terminal (10), a signal including the MDT measurement instruction in response to receiving the signal requesting the MDT measurement instruction; and
a storage unit (208) configured to store a MDT measurement result and information regarding location of the radio terminal (10) received from the radio terminal (10).

22. A control apparatus (30; 40) configured to communicate with a radio station (20), comprising:
a reception unit (301; 401) configured to receive, from the radio station (20), a Minimization of Drive Test, MDT, measurement instruction request signal transmitted from a radio terminal (10);
a control unit (303; 403) configured to determine, in response to the MDT measurement instruction request signal, whether or not a MDT measurement result by the radio terminal (10) is necessary; and
a transmission unit (302; 402) configured to, when it is determined that the MDT measurement result is necessary, transmit the MDT measurement instruction signal to the radio terminal (10).

23. A radio communication system, comprising:
a radio terminal (10) according to any one of claim 1 to 10;
a radio station (20) according to claim 21; and
a control apparatus (30; 40) according to claim 22.

24. The radio communication system according to claim 23, wherein the radio terminal (10) is a mobile terminal and the radio station (20) is a radio base station.

25. A computer readable medium carrying a computer program which, when executed by a processor in a radio terminal (10) configured to communicate with a radio station (20), causes the radio terminal (10) to perform the method according to any one of claims 11 to 20.

## Patentansprüche

1. Funkendgerät (10), das konfiguriert ist, um mit einer Funkstation (20) zu kommunizieren, das aufweist:
eine Steuereinheit (103), die konfiguriert ist, um ein Signal, das eine Messanweisung für eine Minimierung der Messfahrt (MDT; Minimization of Drive Test) von der Funkstation (20) anfordert, an die Funkstation (20) zu senden;
eine Messeinheit (104), die konfiguriert ist, um ansprechend auf den Empfang der MDT-Messanweisung von der Funkstation (20) die MDT-Messung durchzuführen; und
eine Sendeeinheit (106), die konfiguriert ist, um ein Signal, das ein MDT-Messergebnis meldet, und Informationen bezüglich des Orts des Funkendgeräts (10) an die Funkstation (20) zu senden.

2. Funkendgerät (10) nach Anspruch 1, wobei die Steuereinheit (103) konfiguriert ist, um das Signal, das die MDT-Messanweisung anfordert, ansprechend auf das Auftreten eines Auslösers an dem Funkendgerät (10) zu senden.

3. Funkendgerät (10) nach Anspruch 2, wobei der Auslöser an dem Funkendgerät (10) aufgrund einer MDT-Messanweisungsanforderungsbedienung durch einen Benutzer des Funkendgeräts (10) auftritt oder aufgrund einer MDT-Messanweisungsanforderung, die von der RRC-, Funkressourcensteuerungs-, (Radio Resource Control) Schicht oder einer Schicht einer höheren Ebene als die RRC-Schicht innerhalb des Funkendgeräts (10) empfangen wird, auftritt.

4. Funkendgerät (10) nach Anspruch 3, wobei die Steuereinheit (103) konfiguriert ist, um das Auftreten des Auslösers an dem Funkendgerät (10) basierend auf einer Empfangsqualität eines Abwärtsstreckensignals, das von der Funkstation (20) empfangen wird, und/oder den Informationen bezüglich des Orts und/oder Informationen bezüglich der Nachbarzelle und/oder Informationen bezüglich der Zellenauswahl und/oder Informationen bezüglich des Kommunikationsstatus zu erfassen.

5. Funkendgerät (10) nach Anspruch 4, wobei die Steuereinheit (103) konfiguriert ist, um das Auftreten des Auslösers an dem Funkendgerät (10) zu erfassen, wenn die Empfangsqualität verschlechtert ist, so dass sie unter einen vorgegebenen Wert fällt, wenn die Verschlechterung der Empfangsqualität sich eine vorgegebene Zeitspanne oder länger fortsetzt oder wenn die Empfangsqualität sich wieder erholt, so dass sie den vorgegebenen Wert übersteigt.

6. Funkendgerät (10) nach Anspruch 4, wobei die Steuereinheit (103) konfiguriert ist, um das Auftreten des Auslösers an dem Funkendgerät (103) basierend darauf zu erfassen, dass die Informationen bezüglich des Orts einen vorgegebenen Bereich angeben, und/oder die Informationen bezüglich des Orts erhalten werden können, und/oder dass die Genauigkeit der Informationen bezüglich des Orts einen vorgegebenen Wert oder höher hat.

7. Funkendgerät (10) nach Anspruch 6, wobei die Informationen bezüglich des Orts Ortsinformationen umfassen, die unter Verwendung eines globalen Navigationssatellitensystems oder eines Ortungsdienstes LCS (Location Service) gewonnen werden, die von einem Funkkommunikationssystem einschließlich der Funkstation unterstützt werden.

8. Funkendgerät (10) nach einem der Ansprüche 2 - 7, wobei eine Bedingung für das Auftreten des Auslösers an dem Funkendgerät (10) von der Funkstation (20) gemeldet wird.

9. Funkendgerät (10) nach einem der Ansprüche 1 - 8, wobei die Informationen bezüglich des Orts gewonnen werden, bevor das Signal, das die MDT-Messungsanweisung anfordert, gesendet wird.

10. Funkendgerät (10) nach einem der Ansprüche 1 - 9, wobei das Funkendgerät (10) konfiguriert ist, um von einem Leerlaufzustand RRC_Idle in einen aktiven Zustand RRC_Connected überzugehen und die Messanweisungsanforderung unter Verwendung einer Verbindungseinrichtungsanforderungsnachricht an die Funkstation (20) oder einer Verbindungseirichtungsabschlussnachricht an die Funkstation (20) zu senden, wenn die Steuereinheit (103) die MDT-Messanweisung anfordert.

11. Kommunikationssteuerverfahren, das von einem Funkendgerät (10) durchgeführt wird, das konfiguriert ist, um mit einer Funkstation (20) zu kommunizieren, das aufweist:
Senden (S1) eines Signals, das eine Messanweisung für eine Minimierung der Messfahrt MDT von der Funkstation (20) anfordert, an die Funkstation (20);
ansprechend auf den Empfang der MDT-Messanweisung von der Funkstation (20) Durchführen der MDT-Messung (S3); und
Senden (S4) eines Signals, das ein MDT-Messergebnis meldet, und Informationen bezüglich des Orts des Funkendgeräts (10) an die Funkstation (20).

12. Kommunikationssteuerverfahren nach Anspruch 11, wobei das Signal, das die MDT-Messanweisung anfordert, ansprechend auf das Auftreten eines Auslösers an dem Funkendgerät (10) gesendet wird.

13. Kommunikationssteuerverfahren nach Anspruch 12, wobei der Auslöser an dem Funkendgerät (10) aufgrund einer Messanweisungsanforderungsbedienung durch einen Benutzer des Funkendgeräts (10) auftritt oder aufgrund einer MDT-Messanweisungsanforderung, die von der RRC- (Radio Resource Control) Schicht oder einer Schicht einer höheren Ebene als die RRC-Schicht innerhalb des Funkendgeräts (10) empfangen wird, auftritt.

14. Kommunikationssteuerverfahren nach Anspruch 13, wobei das Auftreten des Auslösers an dem Funkendgerät (10) basierend auf einer Empfangsqualität eines Abwärtsstreckensignals, das von der Funkstation (20) empfangen wird, und/oder den Informationen bezüglich des Orts und/oder Informationen bezüglich der Nachbarzelle und/oder Informationen bezüglich der Zellenauswahl und/oder Informationen bezüglich des Kommunikationsstatus erfasst wird.

15. Kommunikationssteuerverfahren nach Anspruch 14, wobei das Auftreten des Auslösers an dem Funkendgerät (10) erfasst wird, wenn die Empfangsqualität verschlechtert ist, so dass sie unter einen vorgegebenen Wert fällt, wenn die Verschlechterung der Empfangsqualität sich eine vorgegebene Zeitspanne oder länger fortsetzt oder wenn die Empfangsqualität sich wieder erholt, so dass sie den vorgegebenen Wert übersteigt.

16. Kommunikationssteuerverfahren nach Anspruch 14, wobei das Auftreten des Auslösers an dem Funkendgerät (10) basierend darauf erfasst wird, dass die Informationen bezüglich des Orts einen vorgegebenen Bereich angeben, und/oder die Informationen bezüglich des Orts erhalten werden können, und/oder dass die Genauigkeit der Informationen bezüglich des Orts einen vorgegebenen Wert oder höher hat.

17. Kommunikationssteuerverfahren nach Anspruch 16, wobei die Informationen bezüglich des Orts Ortsinformationen umfassen, die unter Verwendung eines globalen Navigationssatellitensystems oder eines Ortungsdienstes LCS (Location Service) gewonnen werden, die von einem Funkkommunikationssystem einschließlich der Funkstation (20) unterstützt werden.

18. Kommunikationssteuerverfahren nach einem der Ansprüche 11 - 17, wobei die Informationen bezüglich des Orts gewonnen werden, bevor das Signal, das die MDT-Messungsanweisung anfordert, gesendet wird.

19. Kommunikationssteuerverfahren nach einem der Ansprüche 12 - 17, wobei eine Bedingung für das Auftreten des Auslösers an dem Funkendgerät (10) von der Funkstation (20) angezeigt wird.

20. Kommunikationssteuerverfahren nach einem der Ansprüche 11 - 19, wobei das Funkendgerät (10) von einem Leerlaufzustand RRC_Idle in einen aktiven Zustand RRC_Connected übergeht und die MDT-Messanweisungsanforderung unter Verwendung einer Verbindungseinrichtungsanforderungsnachricht an die Funkstation (20) oder einer Verbindungseinrichtungsabschlussnachricht sendet, wenn die Messanweisung angefordert wird.

21. Funkstation (20), die konfiguriert ist, um mit einem Funkendgerät (10) zu kommunizieren, die aufweist:
eine Empfangseinheit (201), die konfiguriert ist, um von dem Funkendgerät (10) ein Signal zu empfangen, das eine Messanweisung für eine Minimierung der Messfahrt MDT anfordert;
eine Sendeeinheit (207), die konfiguriert ist, um ansprechend auf den Empfang des Signals, das die MDT-Messanweisung anfordert, ein Signal mit der MDT-Messanweisung an das Funkendgerät (10) zu senden; und
eine Speichereinheit (208), die konfiguriert ist, um ein MDT-Messergebnis und Informationen bezüglich des Orts des Funkendgeräts (10), die von dem Funkendgerät (10) empfangen werden, zu speichern.

22. Steuervorrichtung (30; 40), die konfiguriert ist, um mit einer Funkstation (20) zu kommunizieren, die aufweist:
eine Empfangseinheit (301; 401), die konfiguriert ist, um von der Funkstation (20) ein von einem Funkendgerät (10) gesendetes Anforderungssignal für eine Messanweisung für eine Minimierung der Messfahrt MDT zu empfangen;
eine Steuereinheit (303; 403), die konfiguriert ist, um ansprechend auf das MDT-Messanweisungssignal zu bestimmen, ob ein MDT-Messergebnis durch das Funkendgerät (10) notwendig ist oder nicht; und
eine Sendeeinheit (302; 402), die konfiguriert ist, um das MDT-Messanweisungssignal an das Funkendgerät (10) zu senden, wenn bestimmt wird, dass das MDT-Messergebnis notwendig ist.

23. Funkkommunikationssystem, das aufweist:
ein Funkendgerät (10) nach einem der Ansprüche 1 bis 10;
eine Funkstation (20) nach Anspruch 21; und
eine Steuervorrichtung (30; 40) nach Anspruch 22.

24. Funkkommunikationssystem nach Anspruch 23, wobei das Funkendgerät (10) ein mobiles Endgerät ist und die Funkstation (20) eine Funkbasisstation ist.

25. Computerlesbares Medium, das ein Computerprogramm trägt, welches, wenn es von einem Prozessor in einem Funkendgerät (10) ausgeführt wird, das dafür konfiguriert ist, mit einer Funkstation (20) zu kommunizieren, bewirkt, dass das Funkendgerät (10) das Verfahren nach einem der Ansprüche 11 bis 20 durchführt.

## Revendications

1. Terminal radio (10) configuré pour communiquer avec une station radio (20), comprenant :
une unité de contrôle (103) configurée pour transmettre, à la station radio (20), un signal demandant une instruction de mesure de minimisation de test de commande, MDT, à partir de la station radio (20) ;
une unité de mesure (104) configurée pour réaliser la mesure MDT en réponse à la réception de l'instruction de mesure MDT à partir de la station radio (20) ; et
une unité de transmission (106) configurée pour transmettre, à la station radio (20), un signal rapportant un résultat de mesure MDT et des informations concernant l'emplacement du terminal radio (10).

2. Terminal radio (10) selon la revendication 1, dans lequel l'unité de contrôle (103) est configurée pour transmettre le signal demandant l'instruction de mesure MDT en réponse à l'occurrence d'un déclenchement au niveau du terminal radio (10).

3. Terminal radio (10) selon la revendication 2, dans lequel le déclenchement au niveau du terminal radio (10) se produit en raison d'une opération de demande d'instruction de mesure MDT par un utilisateur du terminal radio (10) ou se produit en raison d'une demande d'instruction de mesure MDT reçue à partir d'une couche de contrôle des ressources radio, RRC, ou d'une couche de niveau supérieur à la couche RRC à l'intérieur du terminal radio (10).

4. Terminal radio (10) selon la revendication 3, dans lequel l'unité de contrôle (103) est configurée pour détecter l'occurrence du déclenchement au niveau du terminal radio (10), sur la base d'au moins l'un parmi une qualité reçue d'un signal de liaison descendante reçu à partir de la station radio (20), les informations concernant l'emplacement, les informations concernant une cellule voisine, les informations concernant la sélection de cellule, et les informations concernant le statut de communication.

5. Terminal radio (10) selon la revendication 4, dans lequel l'unité de contrôle (103) est configurée pour détecter l'occurrence du déclenchement au niveau du terminal radio (10), lorsque la qualité reçue est dégradée pour tomber en dessous d'une valeur prédéterminée, lorsque la dégradation de la qualité reçue continue pendant une période prédéterminée ou plus, ou lorsque la qualité reçue est rétablie pour dépasser la valeur prédéterminée.

6. Terminal radio (10) selon la revendication 4, dans lequel l'unité de contrôle (103) est configurée pour détecter l'occurrence du déclenchement au niveau du terminal radio (103) sur la base au moins d'un élément parmi le moment où les informations concernant l'emplacement indiquent une zone prédéterminée, le moment où les informations concernant l'emplacement peuvent être obtenues, et le moment où la précision des informations concernant l'emplacement est une valeur prédéterminée ou supérieure.

7. Terminal radio (10) selon la revendication 6, dans lequel les informations concernant l'emplacement incluent des informations d'emplacement obtenues en utilisant un système mondial de navigation par satellite ou un service de localisation, LCS, pris en charge par un réseau de communication radio incluant la station radio.

8. Terminal radio (10) selon l'une quelconque des revendications 2 à 7, dans lequel une condition de l'occurrence du déclenchement au niveau du terminal radio (10) est notifiée par la station radio (20).

9. Terminal radio (10) selon l'une quelconque des revendications 1 à 8, dans lequel les informations concernant l'emplacement sont obtenues avant la transmission du signal demandant l'instruction de mesure MDT.

10. Terminal radio (10) selon l'une quelconque des revendications 1 à 9, dans lequel le terminal radio (10) est configuré, lorsque l'unité de contrôle (103) demande l'instruction de mesure MDT, pour effectuer une transition à partir d'un état de veille, RRC_Idle, vers un état actif, RRC_Connected, et pour transmettre la demande d'instruction de mesure en utilisant un message de demande d'établissement de connexion à la station radio (20) ou un message d'achèvement d'établissement de connexion à la station radio (20).

11. Procédé de contrôle de communication réalisé par un terminal radio (10) configuré pour communiquer avec une station radio (20), comprenant :
transmettre (S1), à la station radio (20), un signal demandant une instruction de mesure de minimisation d'essai de commande, MDT, à partir de la station radio (20) ;
réaliser la mesure MDT (S3) en réponse à la réception de l'instruction de mesure MDT à partir de la station radio (20) ; et
transmettre (S4) à la station radio (20)
un signal rapportant un résultat de mesure MDT et des informations concernant l'emplacement du terminal radio (10).

12. Procédé de contrôle de communication selon la revendication 11, dans lequel le signal demandant l'instruction de mesure MDT est transmis en réponse à une occurrence d'un déclenchement au niveau du terminal radio (10).

13. Procédé de contrôle de communication selon la revendication 12, dans lequel le déclenchement au niveau du terminal radio (10) se produit en raison d'une opération de demande d'instruction de mesure par un utilisateur du terminal radio (10) ou se produit en raison d'une demande d'instruction de mesure MDT reçue à partir d'une couche de contrôle des ressources radio, RRC, ou d'une couche de niveau supérieur à la couche RRC à l'intérieur du terminal radio (10).

14. Procédé de contrôle de communication selon la revendication 13, dans lequel l'occurrence du déclenchement au niveau du terminal radio (10) est détectée sur la base d'au moins l'un des éléments parmi une qualité reçue d'un signal de liaison descendante reçu à partir de la station radio (20), les informations concernant l'emplacement, les informations concernant une cellule voisine, les informations concernant la sélection de cellule, et les informations concernant le statut de communication.

15. Procédé de contrôle de communication selon la revendication 14, dans lequel l'occurrence du déclenchement au niveau du terminal radio (10) est détectée lorsque la qualité reçue est dégradée pour tomber en dessous d'une valeur prédéterminée, lorsque la dégradation de la qualité reçue continue pendant une période prédéterminée ou plus, ou lorsque la qualité reçue est rétablie pour dépasser la valeur prédéterminée.

16. Procédé de contrôle de communication selon la revendication 14, dans lequel l'occurrence du déclenchement au niveau du terminal radio (10) est détectée sur la base d'au moins l'un parmi le moment où les informations concernant l'emplacement indiquent une zone prédéterminée, le moment où les informations concernant l'emplacement peuvent être obtenues, et le moment où la précision des informations concernant l'emplacement est une valeur prédéterminée ou supérieure.

17. Procédé de contrôle de communication selon la revendication 16, dans lequel les informations concernant l'emplacement incluent des informations d'emplacement obtenues par un système mondial de navigation par satellite ou un service de localisation, LCS, pris en charge par un réseau de communication radio incluant la station radio (20).

18. Procédé de contrôle de communication selon l'une quelconque des revendications 11 à 17, dans lequel les informations concernant l'emplacement sont obtenues avant la transmission du signal demandant l'instruction de mesure MDT.

19. Procédé de contrôle de communication selon l'une quelconque des revendications 12 à 17, dans lequel une condition de l'occurrence du déclenchement au niveau du terminal radio (10) est indiquée à partir de la station radio (20).

20. Procédé de contrôle de communication selon l'une quelconque des revendications 11 à 19, dans lequel, lorsque l'instruction de mesure est demandée, le terminal radio (10) effectue une transition à partir d'un état de veille, RRC_Idle, vers un état actif, RRC_Connected, et transmet la demande d'instruction de mesure MDT en utilisant un message de demande d'établissement de connexion à la station radio (20) ou un message d'achèvement d'établissement de connexion à celle-ci.

21. Station radio (20) configurée pour communiquer avec un terminal radio (10), comprenant :
une unité de réception (201) configurée pour recevoir, à partir du terminal radio (10), un signal demandant une instruction de mesure de minimisation d'essai de commande, MDT ;
une unité de transmission (207) configurée pour transmettre, au terminal radio (10), un signal incluant l'instruction de mesure MDT en réponse à la réception du signal demandant l'instruction de mesure MDT ; et
une unité de stockage (208) configurée pour stocker un résultat de mesure MDT et des informations concernant l'emplacement du terminal radio (10) reçues à partir du terminal radio (10).

22. Appareil de contrôle (30 ; 40) configuré pour communiquer avec une station radio (20), comprenant :
une unité de réception (301 ; 401) configurée pour recevoir, à partir de la station radio (20), un signal de demande d'instruction de mesure de minimisation d'essai de commande, MDT, transmis à partir d'un terminal radio (10) ;
une unité de contrôle (303 ; 403) configurée pour déterminer, en réponse au signal de demande d'instruction de mesure MDT, si un résultat de mesure MDT par le terminal radio (10) est nécessaire ou non ; et
une unité de transmission (302 ; 402) configurée, lorsqu'il est déterminé que le résultat de mesure MDT est nécessaire, pour transmettre le signal d'instruction de mesure MDT au terminal radio (10).

23. Système de communication radio, comprenant :
un terminal radio (10) selon l'une quelconque des revendications 1 à 10 ;
une station radio (20) selon la revendication 21 ; et
un appareil de contrôle (30 ; 40) selon la revendication 22.

24. Système de communication radio selon la revendication 23, dans lequel le terminal radio (10) est un terminal mobile et la station radio (20) est une station de base radio.

25. Support lisible par ordinateur supportant un programme d'ordinateur qui, lorsqu'il est exécuté par un processeur dans un terminal radio (10) configuré pour communiquer avec une station radio (20), amène le terminal radio (10) à réaliser le procédé selon l'une quelconque des revendications 11 à 20.
